(19) Europäisches Patentamt
European Patent Office
Office européen des brevets

(11) EP 4 339 847 A1

(12) EUROPEAN PATENT APPLICATION

(43) Date of publication:
20.03.2024 Bulletin 2024/12

(51) International Patent Classification (IPC):
G06N 10/20 (2022.01)    G06N 10/60 (2022.01)

(21) Application number: 22196222.8

(52) Cooperative Patent Classification (CPC):
G06N 10/60; G06N 10/20

(22) Date of filing: 16.09.2022

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Qu&CO R&D B.V.
1071 LE Amsterdam (NL)

(72) Inventors:
• Elfving, Vincent Emanuel
1071 LE Amsterdam (NL)
• Kasture, Sachin
1071 LE Amsterdam (NL)

(74) Representative: De Vries & Metman
Overschiestraat 180
1062 XK Amsterdam (NL)

(54) **EFFICIENT TRAINING OF A QUANTUM SAMPLER**

(57)    Methods for training and sampling a quantum model are described wherein the method comprises: training a quantum model, preferably a generative quantum model, as a quantum sampler configured to produce samples which are associated with a predetermined target probability distribution and which are exponentially hard to compute classically, the training including classically computing probability amplitudes associated with an execution of a first parameterized quantum circuit that defines a sequence of gate operations for a quantum register and optimizing one or more parameters of the first parameterized quantum circuit based on the classically computed probability amplitudes; and, executing a sampling process using the hardware quantum register, the sampling process including determining an optimized quantum circuit based on the one or more optimized parameters and the first parameterized quantum circuit or a second parameterized quantum circuit, which is related to the first parameterized quantum circuit, and executing the optimized quantum circuit on the hardware quantum register and generating a sample by measuring the output of the hardware quantum register.

Fig. 4

**Description**

Technical field

The disclosure relates to efficiently training a quantum sampler, and in particular, though not exclusively, to methods and systems for efficiently training a quantum sampler, in particular a qudit-based quantum sampler, and a computer program product for executing such methods.

Background

Quantum machine learning (QML), which combines principles of machine learning and quantum computation, has in recent years gained a lot of attention because of its potential to make use of the power of quantum computing to perform certain learning tasks which are difficult or impossible to solve using a classical computer. Apart from applications in fields like quantum chemistry (where the modelled data is inherently quantum), QLM has shown a lot of promise for solving optimization problems with possible applications in supply chain management, drug discovery, weather prediction and solving stochastic and/or nonlinear differential equations.

QML has been studied in the context of various classical machine learning problems like classification, generating graph embeddings and dimensional reduction such as PCA, reinforcement learning, anomaly detection etc. One particular scheme, referred to as quantum generative modelling has shown to be a promising approach since recent results that quantum samplers can be produced that show quantum advantage. Generative modelling in general refers to developing or training of a model to output samples drawn from a certain desired distribution. An example of quantum generative modelling is described in the article by Jin-Guo Liu et al, Differentiable learning of quantum circuit Born machines, Phys. Rev. A 98, 062324, 2018. These quantum samplers are configured to execute sequences of gate operations, referred to as quantum circuits, on a hardware quantum register which put the quantum register in a quantum state that is associated with a target probability distribution. By measuring the expectation value of the quantum state of the quantum register, samples can be produced of the desired probability distribution. It is well known that to outperform the best classical computers typically a quantum register comprising a hundred up to a few hundred qubits is needed. Trying to classically compute samples that can be generated by a quantum sampler comprising a few hundred qubits is classical hard, requiring computing resources that scale exponentially with the number of qubits.

Quantum samplers that have shown quantum advantage include qubit-based samplers that are configured to perform random quantum circuit sampling or instantaneous quantum-polynomial (IQP) circuit sampling. Quantum samplers can be used for generative modelling tasks and optimization task with possible applications in generating solutions to stochastic differential equations, problems in finance like portfolio optimization where optimal solutions are preferentially sampled, resource optimization with applications in energy conservation, sampling stable molecular docking configurations for drug discovery etc.

To train a quantum model as a quantum sampler, parameterized quantum circuits may be used to produce a certain quantum state of a qubit-based quantum register that is associated with a desired target distribution. Algorithms like gradient descent may be used to optimize the parameters of the quantum circuit to produce the target distribution. This involves finding gradients of loss functions with respect to the circuit parameters. Additionally, in some cases quantum circuits themselves can be used for efficient gradient calculation using the parameter-shift rule and by treating the gradient as an observable. Essentially to find the gradient with respect to a certain parameter, the same quantum circuit with shifted parameters is used. This means that for P parameters, the same circuit has to be run with 2P different settings to estimate all the P gradients.

For each parameter setting, a large number of samples have to be generated by executing the parameterized quantum circuit. A gradient can then be estimated on a classical computer using these generated samples. This entire process from loading of the initial state of the quantum register to the generation of a single sample by measuring the quantum register can be very slow on current quantum devices. The loading of an input and generating a single sample can take on the order of a few hundreds of $\mu$s to several ms. So even with a polynomial scale-up, this can potentially take a very long time to train. This is because essentially the clock-rate of these devices is very slow (1000-10000 times slower than a regular classical computer). Typically, this results in 99% of the computational resources being spent on training while only 1% being spent on the actual sample generation. Thus, while quantum samplers are very efficient when they are already loaded with the optimized parameters to produce samples, the training process itself can be very resource intensive.

Hence, from the above it follows that there is a need in the art for improved schemes for training quantum samplers. In particular, there is a need in the art for training schemes for efficiently training quantum samplers that provide a quantum advantage.

Summary

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an objectoriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks. Additionally, the Instructions may be executed by any type of processors, including but not limited to one or more digital signal processors (DSPs), general purpose microprocessors, application specific integrated circuits (ASICs), field programmable logic arrays (FP- GAs), or other equivalent integrated or discrete logic circuitry.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

The embodiments in this disclosure generally relate to efficient training of quantum generative models, including training of a quantum model to output a certain desired distribution. The embodiments aim to efficiently train a quantum model as a quantum sampler for producing samples which are associated with a predetermined target distribution and which are exponentially hard to compute classically. The training includes classically computing probability amplitudes associated with the execution of a parameterized quantum circuit that defines a sequence of qudit operations. The optimized parameters obtained by this training process are used in the execution of a quantum circuit on a hardware quantum register to configure it as a quantum sampler which exhibits quantum advantage in sampling. Samples associated with the target distribution can be efficiently produced by measuring the output of the quantum register.

In a first aspect, the embodiments relate to a method for training and sampling a quantum model comprising training a quantum model, preferably a generative quantum model, as a quantum sampler configured to produce samples which are associated with a predetermined target probability distribution and which are exponentially hard to compute classically, the training including classically computing probability amplitudes associated with an execution of a first parameterized quantum circuit that defines a sequence of gate operations for a quantum register and optimizing one or more parameters of the first parameterized quantum circuit based on the classically computed probability amplitudes; and, executing a sampling process using the hardware quantum register, the sampling process including determining an optimized quantum circuit based on the one or more optimized parameters and the first parameterized quantum circuit or a second parameterized quantum circuit, which is related to the first parameterized quantum circuit, and executing the optimized quantum circuit on the hardware quantum register and generating a sample by measuring the output of the hardware quantum register.

Thus, in contrast to conventional quantum sampler approaches, wherein variational parameters of the quantum model are tuned by generating samples using quantum hardware and classical post-processing to estimate the gradient, the training procedure according to the embodiments in this disclosure can be performed fully classically. This way, the training can be executed on a classical computer and only relies on classical estimation of probabilities and their gradients with respect to the variational parameters. The training schemes for the quantum samplers described with reference to the embodiments can be implemented in gate-based programmable quantum computer architectures, e.g. qudit-based quantum registers. During the training phase there is no need for any sampling operations of a hardware quantum register.

To that end, the embodiments use quantum circuits to classically train a quantum model as a quantum sampler, which is classically hard to sample from. The quantum circuits used for such classical training process have the property that the probabilities can be estimated on a classical computer in polynomial time, while the generation of samples associated with such quantum circuit is classically hard. This means that such samples can only be generated using computational resources which grow exponentially in the number of qubits. Quantum samplers that generate samples which are classically hard to determine should be demarcated from quantum samplers that generate samples which are classically easy to determine, meaning that such samples, e.g. quantum samplers based on Clifford quantum circuits, can be generated using computational resources which only grow at most polynomial in the number of qubits.

In an embodiment, the first parameterized quantum circuit and/or the second parameterized circuit may be selected from a class of quantum circuits wherein: multiplicative $\epsilon$ estimation of the probability amplitudes based on a quantum circuit of the class of quantum circuits is classically hard; additive $\epsilon$ estimation of the probability amplitudes based on a quantum circuit of the class of quantum circuits is classically easy; and, the probability distribution generated by a quantum circuit of the class of quantum circuits is not poly-sparse.

Here, an estimator $p_s$ may be used to estimate a probability $p$ up to an additive precision if $Probability(|p - p_s| \geq \epsilon) \leq \delta$, wherein estimator $p_s$ estimates the value of probability $p$, $\epsilon$ is the error in the estimate $p_s$ and $\delta$ is the confidence or the probability that the error is $\geq \epsilon$. Usually this number has values 0.9, 0.95, 0.99 and determine how accurate our estimates of error $\epsilon$ are. This estimator is then said to be an additive $(\epsilon, \delta)$ estimator or simply an additive $\epsilon$ estimator. Similarly, an estimator $p_s$ may estimate a probability $p$ up to a multiplicative precision if $Probability(|p - p_s| \geq \epsilon p) \leq \delta$. This estimator is then said to be a multiplicative $(\epsilon, \delta)$ estimator or simply a multiplicative $\epsilon$ estimator. In both the cases, the resources are polynomial in $\frac{1}{\epsilon}$, since $p \leq 1$.

In an embodiment, the training may further include computing marginal probabilities and/or operator expectation values and/or expectation values of observables on the basis of the classically computed probability amplitudes.

In an embodiment, optimizing the one or more parameters of the first parameterized quantum circuit may further include: estimating a model probability density function and/or derivative of the model probability density function with respect to the variational parameters based on the classically computed probability amplitudes; and, updating the one or more parameters by comparing the model distribution with the target distribution based on a loss function or a derivative of the loss function with respect to the variational parameters.

In an embodiment, the first parameterized quantum circuit may comprise a first variational quantum circuit and the second quantum circuit comprises a second variational quantum circuit, the second variational quantum circuit being the inverse of the first variational quantum circuit.

In an embodiment, executing the optimized quantum circuit may include: translating quantum operations of the optimized quantum circuit into a sequence of control signals; and, controlling the qubits of the hardware quantum register based on the control signals.

In an embodiment, the output of quantum register may be measured in the computational basis, a measurement comprising a ditstring, preferably a bitstring, the ditstring representing a sample.

In an embodiment, the classical training of the quantum model may be based on a differentiable quantum generative model (DQGM) scheme, a quantum circuit born machines (QCBM) scheme or quantum generative adversarial network (QGAN) scheme.

In an embodiment, the first quantum circuit and/or second quantum circuit may include an instantaneous quantum-polynomial, IQP, circuit including a layer of commuting gate operations between two layers of Hadamard operations.

In an embodiment, the first quantum circuit and/or second quantum circuit may be an extended IQP circuit including a central layer of Hadamard operations between a first layer and a second layer of Hadamard operations, a first layer of commuting gate operations between the first Hadamard layer and the central Hadamard layer and a second layer of commuting gate operations between the central Hadamard layer and the second Hadamard layer. In an embodiment, the first and/or second commuting gate operations may include a bi-partite entangling layer. Inventors have shown for the first time that these circuits classically simulable and hard to sample from and are thus useful in the context of QGM to show a quantum advantage.

In an embodiment, the first and/or second quantum circuit may include an bi-partite entangling layer. In an embodiment, the bi-partite entangling layer may be implemented as a series of multi-qudit operations.

In another embodiment, the bi-partite entangling layer may be implemented as a series of qubit operations and analog multi-qudit Hamiltonian evolutions.

In an embodiment, the classical training of the quantum model may be based on a quantum generative adversarial network, QGAN, including a quantum generator for generating samples and discriminator for discriminating samples from the generator and the target probability distribution.

In an embodiment, the hardware quantum register may comprise qudits, preferably qubits.

In an embodiment, probability amplitudes may be computed based on a CPU, GPU, TPU or a special-purpose computation device, such as an FPGA or an ASIC; wherein the probability amplitudes are computed based on exact wavefunction simulation, tensor-network based simulation, Monte Carlo simulation or noisy simulation.

In an embodiment, the qudits of the quantum register may be based on Rydberg atoms, quantum dots, nitrogen-vacancy centers, ions, superconducting circuits and/or photons.

In an embodiment, the training of the quantum model may include computing one or more efficiently simulable properties of the quantum model, such as bitstring-probabilities, operator expectation values and/or observable expectation values.

In an embodiment, the quantum register may be operated as a NISQ quantum computer wherein one logical qudit is one physical qudit. In another embodiment, the quantum register may be operated as a FTQC quantum computer wherein the information is encoded into a logical qudit which consists of multiple physical qudits.

In an embodiment, the training of the quantum model may be based on gradient-based optimization or gradient-free optimization

In an embodiment, the loss function may include one or more regularization terms

In an embodiment, the target probability distribution may be a one dimensional distribution or a multi-dimensional distribution.

In an embodiment, the first and/or second parameterized quantum circuit may include a quantum feature map and/or a variational ansatz

In an embodiment, optimizing the one or more parameters of the first parameterized quantum circuit includes: minimizing the loss function based on the classically computed probability amplitudes by variationally tuning variational parameters of the first parameterized quantum circuit and repeating execution of quantum gate operations of the variational tuned first parameterized quantum circuit and measurement of the output of the quantum register until a stopping criteria is met.

In another aspect, the embodiments may relate to a system for training and sampling a quantum model using a hybrid data processing system comprising a classical computer and a quantum computer comprising a hardware quantum register, wherein the system is configured to perform the steps of: training a quantum model, preferably a generative quantum model, as a quantum sampler configured to produce samples which are associated with a predetermined target probability distribution and which are exponentially hard to compute classically, the training including classically computing probability amplitudes associated with an execution of a first parameterized quantum circuit that defines a sequence of gate operations for a quantum register and optimizing one or more parameters of the first parameterized quantum circuit based on the classically computed probability amplitudes; executing a sampling process using the hardware quantum register, the sampling process including determining an optimized quantum circuit based on the one or more optimized parameters and the first parameterized quantum circuit or a second parameterized quantum circuit, which is related to the first parameterized quantum circuit, and executing the optimized quantum circuit on the hardware quantum register and generating a sample by measuring the output of the hardware quantum register.

In a further aspect, the embodiments may relate to a system for training and sampling a quantum model using a hybrid data processing system comprising a classical computer and a quantum computer comprising a hardware quantum register, wherein the system is configured to perform any of the steps as described above.

In yet another aspect, the embodiments may relate to a computer program or suite of computer programs comprising at least one software code portion or a computer program product storing at least one software code portion, the software code portion, when run on a hybrid data processing system comprising a classical computer and a quantum computer comprising a hardware quantum register, being configured for executing the method steps as described above.

In an aspect, the embodiments include a method for training and sampling a quantum model comprising: training a quantum model as a quantum sampler configured to produce samples which are associated with a predetermined target probability distribution and which are exponentially hard to compute classically, the training including classically computing probability amplitudes associated with an execution of a parameterized quantum circuit that defines a sequence of qudit operations for a quantum register and optimizing one or more parameters of the parameterized quantum circuit based on the classically computed probability amplitudes; and, executing a sampling process using the hardware quantum register, the sampling process including determining an optimized quantum circuit based on one or more optimized parameters and the quantum circuit and executing the optimized parameterized quantum circuit on the hardware quantum register and generating a sample by measuring the output of the hardware quantum register.

Brief description of the drawings

Fig. 1 describes a schematic of data-driven generative modelling setup;
Fig. 2 depicts a hybrid computer processor comprising a classical computer and a quantum computer.;
Fig. 3 schematically depicts a known scheme for training a quantum model as a quantum sampler;
Fig. 4 schematically depicts a scheme for training a quantum model as a quantum sampler according to an embodiment;
Fig. 5A and 5B depict a scheme for training a quantum circuit Borne machine model as a quantum sampler according to an embodiment;
Fig. 6A and 6B depict a scheme for training a differentiable quantum generative model as a quantum sampler according to an embodiment;
Fig. 7 illustrates the training of a quantum model as a quantum sampler based on a quantum generative adversarial network model according to an embodiment;
Fig. 8A-8E illustrate bi-partite qubit connectivity graphs and quantum circuit associated with the bi-partite qubit connectivity graph according to an embodiment;
Fig. 9 illustrates an example of an extended-IQP circuit for classically training a quantum model according to an embodiment;
Fig. 10 illustrates a flow diagram of a process for training a quantum model as a quantum sampler according to an embodiment;
Fig. 11A-11B describe processes of estimating a model probability density function $p_\theta(x)$;
Fig. 12 illustrates a flow diagram for determining if a classically trainable circuit family is classically hard to sample from;
Fig. 13A-13D show circuit families for which time complexity has been examined;
Fig. 14A-14B show results of time-complexity studies in log and log-log plot respectively;
Fig. 15 shows anti-concentration properties of extended-IQP circuits;
Fig. 16A-16D illustrate sparseness measurements for a random probability distribution for an extended-IQP circuit for different numbers of qubits;
Fig. 17A and 17B shows results of training a quantum model for modelling a Gaussian probability density function and generating samples using such model;

**Fig. 18** is a hardware-level schematic of a quantum register configured to execute gate operations defined in a quantum circuit;
**Fig. 19A-19C** illustrate hardware-level schematics of quantum processors for executing qubit operations; and
**Fig. 20** illustrate hardware-level schematics of quantum processors for executing qubit operations.

Description of the embodiments

The embodiments in this disclosure relate to quantum samplers, which are configured to generate samples associated with a predetermined probability distribution. Quantum samplers are capable of generating samples from a distribution much faster than a classical machine. Quantum samplers can be used in many applications including finding solutions of SDEs that are used for simulating complex physics processes such as plasmas and other diffusive processes, scrambling data using a quantum embedding for anonymization, generating solutions to graph-based problems like maximum independent set or maximum clique, etc.

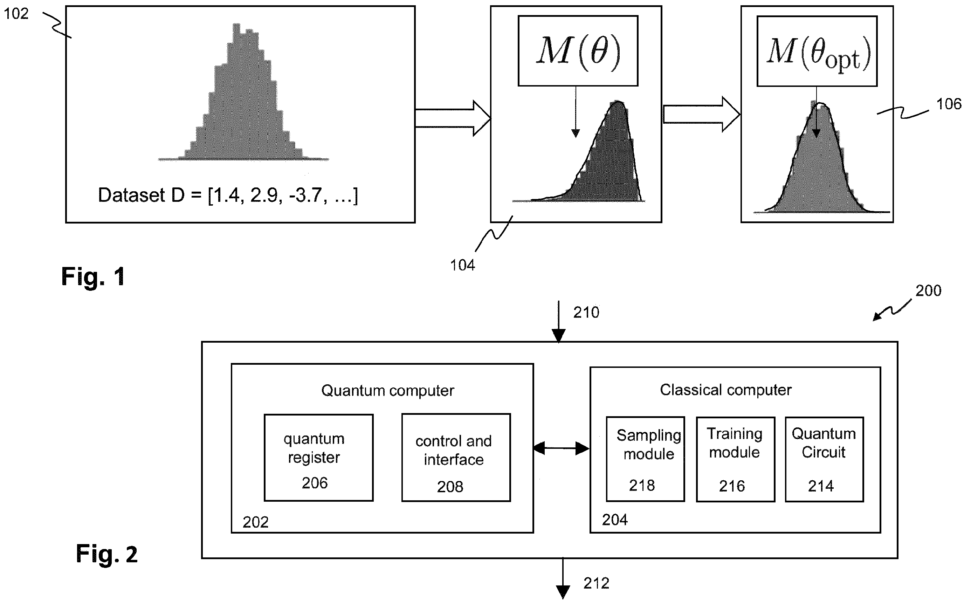

**Fig 1.** schematically illustrates a general scheme of training a quantum model so that it can be used as a quantum sampler. In such scheme, a quantum model M, parameterized by parameters $\theta$, may be variationally optimized, based on training data, e.g. a dataset $D$ of discrete or continuous-variable numbers or vectors, to represent a quantum model which, when sampled from, resembles the original distribution of the input training data. The probability distribution has approximately the same shape as the (normalized) histogram. The probability distribution may be continuous or discrete depending on its variables. Block **102** illustrates the target dataset $D$ that has a certain distribution as shown by the histogram. This data set may be used to train parameterized model $M(\theta)$. Block **104** shows this probability distribution at an intermediate stage of the training process, while block **106** shows the model distribution after the training has been completed and optimized parameters $\theta_{opt}$ have been obtained.

**Fig. 2** depicts a hybrid computer system comprising a classical computer **202** and a quantum computer system **204,** which may be used to implement the embodiments described in this application. In particular, the hybrid computer system may be used to efficiently train a quantum model for quantum sampler with a predetermined distribution. As shown in the figure, the quantum computer system may comprise one or more quantum registers **206,** e.g., a gate-based qudit quantum register. Such quantum register may also be referred to as a quantum processor or a quantum processing unit (QPU).

The system may further include a memory storage for storing a representation of a quantum circuit **214.** A quantum circuit is a set of instructions sent by a classical computer to the quantum computer to execute certain 'gate operations' or 'unitaries'. In practice, the execution of a quantum circuits involves a sequence of operations executed on the quantum registers by a controller system **208** comprising input output (I/O) devices which form an interface between the quantum register and the classical computer. For example, the controller system may include an optical and/or electromagnetic pulse generating system for generating pulses, e.g. optical, voltage and/or microwave pulses, for applying gate operations to the qudits of the quantum register in accordance with the quantum circuit.

Further, the controller may include readout circuitry for readout of the qudits. At least a part such readout circuitry may be located or integrated with the chip that includes the qudits. The system may further comprise a (purely classical information) input **210** an (purely classical information) output **212.** The input and output may be part of an interface, e.g. an interface such as a user interface or an interface to another system. Input data may include training data and/or information about one or more stochastic differential equation(s) which may be used as constraints in the generative modelling. This information may include the dimensionality, order, degree, coefficients, boundary conditions, initial values, regularization values, etc. The input data may be used by the system to classically calculate values, e.g. parameter settings, which may be used to initialize a quantum circuit that is implemented on the quantum processor. Similarly, output data may include loss function values, sampling results, correlator operator expectation values, optimization convergence results, optimized quantum circuit parameters and hyperparameters, and other classical data.

To configure the quantum register as a quantum sampler that is associated with a desired probability, the system may include a training module **216** that is configured to train a quantum model based on gate operations of a parameterized quantum circuit **214** which may be stored in a memory of the system. Information about the quantum circuit and training data may be provided via input **210** to the classical computer. The parameterized quantum circuit may be configured such that it can be simulated classically by the training module **216,** while the process of generating sampling from such circuit by a sampling module **218** is classically hard. Thus, instead of the quantum model being trained based on samples that are generate by executing a parameterized quantum circuit on a hardware quantum register, the training of the quantum model according to the embodiments in this application may be performed fully classically.

That is, the training module may be configured to train the quantum model in an optimization loop based on classically computed probabilities associated with the execution of the parameterized quantum circuit. To that end, the quantum circuits, i.e. the sequence of gate operations, used for such classical training process have the property that the probabilities can be estimated on a classical computer, while the generation of samples based on such quantum circuit is classically hard. In this application this family of quantum circuits is referred to in short as classically trainable quantum circuits. Once optimized parameters of the quantum circuit are computed classically by the training module, the quantum circuit may be configured based on the optimized parameters. The sampling module **218** then executes the optimized quantum circuit on the hardware quantum register to produce samples in the form of bitstrings by measuring the quantum register on its computational basis. Thus, the classical training of the quantum model is based on the execution of quantum circuits that can be classically simulated, while generating samples based on these quantum circuits is still classically hard. This way, a very efficient, resource-saving training method for a quantum sampler is realized.

The quantum samplers described with reference to the embodiments in this application may be configured to execute sequences of gate operations, referred to as quantum circuits, on a hardware quantum register. The execution of such quantum circuit will put the quantum register in a quantum state that is associated with a certain desired target probability distribution. A quantum register referred to in this disclosure (which also may be referred to as quantum processor) may comprise a set of controllable two-level or multi-level systems which may be referred to as qubits or, more generally, in case of a multi-level system, qudits respectively. In case of a qubit-bases quantum register, the two levels are denoted as $|0\rangle$ and $|1\rangle$ and the wave function of a N-qubit quantum register may be regarded as a complex-valued superposition of $2^N$ of these distinct basis states. Examples of such quantum processors include noisy intermediate-scale quantum (NISQ) processors and fault tolerant quantum computing (FTQC) processors. In some embodiments, a quantum processor may be based on a continuous variable system, such as optical or photonic quantum computer comprising photonic elements to generate, manipulate and measure photons representing optical qubits or even qudits.

Using quantum samplers for generative modelling (also referred to as quantum generative modelling (QGM)) exploits the inherent superposition properties of a quantum state along with the probabilistic nature of quantum measurements to design samplers. For e.g., a quantum state over $N$-qubits can be written as a superposition of $2^N$ amplitudes. To sample from a quantum state, a measurement is performed on all or some of the qubits. The probability to obtain a certain outcome is proportional to the amplitude for that outcome in the quantum state and is given by the Born rule. By using parameterized gates like Z-rotation gates ($R_z(\theta)$) in the quantum circuit, a qudit based quantum model may be trained to produce a quantum state, which - when measured - may generate samples associated with a target probability distribution. In this context, the difference between a quantum device (or algorithm) which is configured to compute probabilities and a quantum device (or algorithm) which generates samples, is emphasized. The first quantum device outputs probabilities corresponding to certain event, which acts as an input to the first quantum device. For example, in the context of qubit-based quantum circuits, the input may be a bit string and the output would be the probability associated with the bit string. On the other hand, a quantum sampler is configured to generate samples or bitstrings (in the case of qubits) corresponding to a certain target probability distribution.

Quantum circuit born machines (QCBM) and differential-quantum generative models (DQGM) are two different approaches for training a quantum model as a quantum sampler having a certain probability distribution, which is used produce samples in accordance with the probability distribution. In the QCBM the same quantum circuit is used to train the quantum model and to generate samples. In contrast, in the DQGM scheme, separate (different) quantum circuits are used for training the quantum model and for sampling the trained quantum model. The DQGM scheme approach is especially suitable for generating solutions of differential equations since DQGM training circuit is automatically differentiable with respect to a continuous variable $x$.

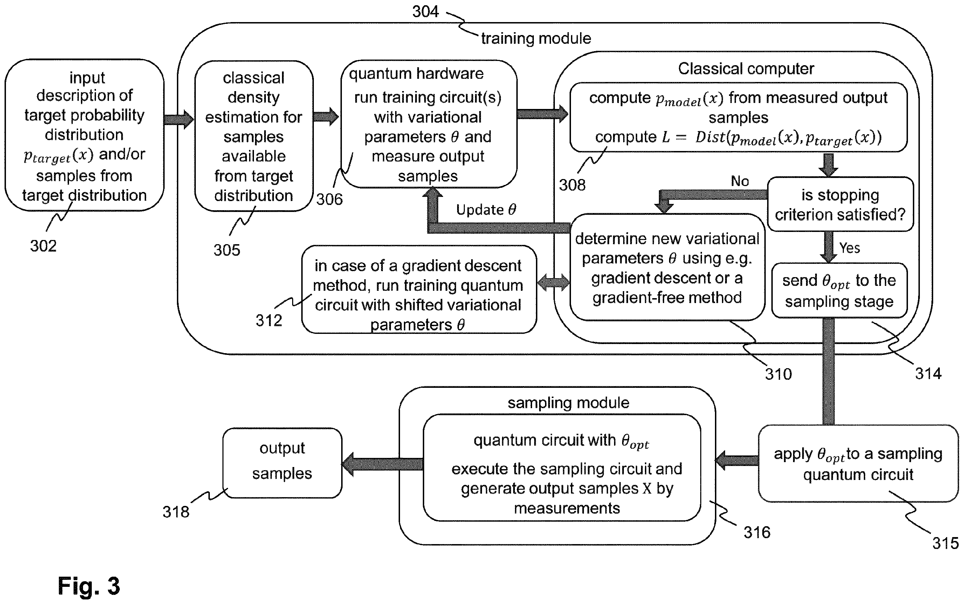

**Fig. 3** schematically depicts a method for training a quantum model as a quantum sampler. In particular, the figure depicts a generic quantum generative modelling (QGM) scheme wherein a quantum model is trained to produce samples according to a predetermined probability distribution. The process may start with input information **302** comprising information about a target probability distribution $p_{target}(x)$ and/or samples (data) associated with the target probability distribution. Here, the probability distribution may have one or more variables. In some embodiments, samples of the target probability distribution may be provided. In that case, a density estimation module **305** may be used to estimate a target probability distribution classically on the basis of the input data. Further, in some embodiments, the input information may include information about a first parameterized quantum circuit which may be used to train a quantum model as a quantum sampler that is associated with the target probability distribution. This quantum first parameterized quantum circuit may be referred to as the training quantum circuit. Here, the parameterized quantum circuit may include sequence of gate operations, including parameterized gate operations, applied to qudits, e.g. qubits, of the quantum register to bring the qudits in a quantum state that is associated with the target probability distribution. The input information may be used by a training module **304** configured to train a quantum model on quantum hardware as a quantum sampler using the training quantum circuit with variational parameters $\theta$ **306**.

During training, the parameterized training quantum circuit may be executed by the hardware quantum register to produce samples of bitstrings (i.e. sequences of one's and zero's). Such samples may be obtained by measuring the output of the quantum register in the computational basis. These generated samples may be used to estimate a model probability density function $p_{model}(x)$ using well known classical postprocessing **308.** In general, the samples can be used to determine different observables depending on a loss function $L$ which is to be evaluated. For example, in case of Hamiltonian minimization, wherein a loss function is used that includes a certain problem Hamiltonian, expectation values of operators, may be measured, e.g. the $\Sigma_{ij} Z_i Z_j$, wherein the operator $Z_i Z_j$ is the product of $Z$ gates acting on the qubits $i,j$. The loss function $L$, which characterizes how close the probability distribution of the samples (produced by executing the parameterized training quantum circuit) is to the target distribution, may computed. This way, the difference between the target probability distribution and the model probability distribution may be determined. If the stopping criteria is not satisfied, then the one or more variational parameters **310** may be updated.

Different methods may be used to find a new variational parameters. For example, a gradient descent method may be used to determine new variational parameters. In that case, the gradient of the loss function with respect to the one or more variational parameters $\partial L/\partial \theta$ may be computed. In an embodiment, such gradient may be computed based on samples that are obtained by executing the quantum circuit with shifted parameters **312** (based on the so-called parameter shift rule). In other embodiments, other differentiation techniques may be used including but not limited to finite differencing methods, overlap-based differentiation, analytical/symbolic differentiation, etc. In further embodiments, gradient free methods for finding new variational parameters may be used.

If the stopping criteria is satisfied, then the optimized parameters $\theta_{opt}$ **314** may be applied to second quantum circuit **315** that is used for generating samples. This second quantum circuit may be referred to as the sampling quantum circuit. In some embodiments, the training circuit is the same as the sampling circuit. In other embodiments, the training circuit is different, but related to the sampling circuit, e.g. a transformed version of the training circuit. A sampling module **316** may execute the sampling quantum circuit with the optimized parameters $\theta_{opt}$ on the hardware quantum computer and generate output samples in the form of bitstrings **318** by measuring the output of the quantum register.

Different quantum generative models may be used. Known models include quantum circuit Borne machine QCBM models and the differentiable quantum generative models DQGM. Further, various formulations of the loss function $L$ can be chosen. For example, in the QCBM case, Maximum Mean Discrepancy (MMD) is widely used. Other formulations may include KL-divergence, Stein-discrepancy, Hamiltonian minimization, etc. When the distribution if part of a differential equation, for example a stochastic differential equation, (part of) the differential equation itself can be used in defining a loss function.

The scheme in **Fig. 3** illustrates that if stopping criteria is not satisfied, the training may proceed by by iteratively updating the parameters $\theta$, e.g. by calculating the gradients of the loss function or another method, until a sufficiently small value of loss function has been obtained. Many samples are needed to make a sufficiently good approximation of the gradient. The number of samples typically goes as $\sim 1/\epsilon^2$, where $\epsilon$ is the estimation error. For current quantum devices, in particular NISQ devices, this process can be extremely time consuming. The entire process from loading the initial state of the quantum register to the generation of a single sample by measuring the quantum register can be very slow on current quantum computers. For example, the loading of an input and generating a single sample can take on the order of a few hundreds of $\mu$s to several ms. So even with a polynomial scale-up, the training may take a very long time. This is because the clock-rate of these devices is very slow (1000-10000 times slower than a regular classical computer). Typically, this results in 99% of the computation resources being spent on the training process, while only 1% of the resources being spent on the actual sample generation. Thus, while quantum samplers that produce samples that are classically hard to compute are very efficient once they are configured with the optimized parameters to produce samples, the training process can be very resource intensive. The embodiments in this disclosure address this problem and provide efficient training schemes for training a quantum model as a quantum sampler, which produces samples that are classically hard to compute.

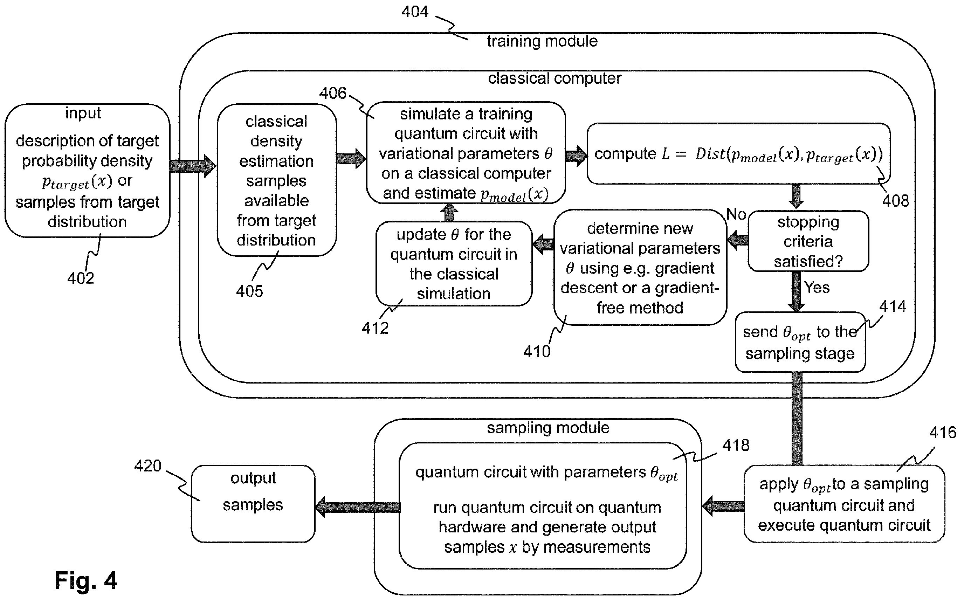

**Fig. 4** schematically depicts a method for training a quantum model as a quantum sampler according to an embodiment. In particular, the figure depicts a scheme for efficiently training a quantum model as a quantum sampler, wherein - in contrast to the scheme of **Fig. 3** - the whole training process is executed on a classical computer. This process may start with input information **402** comprising information about a target probability distribution $p_{target}(x)$ and/or samples associated with such target probability distribution. In some embodiments, samples of the target probability distribution may be provided. In that case, a density estimation module **405** may estimate a target probability distribution classically based on the input data using known density estimation techniques like histogram analysis and/or kernel density estimation among others.

Further, the input information may include information about a parameterized first quantum circuit, the training quantum circuit, which is used for training the quantum model. This training quantum circuit with variational parameters $\theta$ may be simulated on a classical computer. In particular, the this parameterized training quantum circuit may be used to compute amplitude probabilities associated with a model probability distribution $p_{model}(x)$ **404**. Hence, probability amplitudes associated with the execution of the parameterized training quantum circuit may be computed, or at least estimated, using a classical computer. The classically computed probability amplitudes are then used to estimate a model probability distribution $p_{model}(x)$ **406**. After classically estimating the probability amplitude for a certain value $x$, the square of its modulus will give the probability distribution $p(x)$.

Thus, in contrast to the quantum circuits used in the conventional training scheme of **Fig. 3,** in this embodiment, the quantum circuit used for training the quantum model, belongs to a family of quantum circuits, which wherein the amplitude probabilities associated with execution of the quantum circuit can be computed classically, but wherein the generation of the samples is still classically hard. The latter means that such samples can only be generated using computational resources which grow exponentially in the number of qubits.

Based on the estimated model probability distribution and the target probability distribution a loss function may be used to compute a loss **408.** If the computed loss does not satisfy one or more stopping criteria, variational parameters may be computed. For example a gradient of the loss function **410** with respect to the one or more parameters may be computed using the parameter shift rule. Alternatively, another differentiation technique or a gradient fee method may be used to compute an updated variational parameter. This updated variational parameter may be used to configure an updated quantum circuit **412,** which is used for computing further amplitude probabilities, which - in turn - are used to estimate a further model probability distribution (in the same way as step **406**). This optimization loop may be executed iteratively until the one or more stopping criteria are satisfied. If the one or more stopping criteria are met, the optimized variational parameter may be used to configure a second quantum circuit, the sampling quantum circuit **416.** The sampling quantum circuit provided with the optimized variational parameters may be executed on a hardware quantum register (step **418**) so that the hardware quantum register is configured as a quantum sampler associated with the target probability which can generate samples **420.** It is noted that depending on the implementation, the training quantum circuit for classically training the quantum model may be identical to the sampling quantum circuit that is used for sampling. In other embodiments, the training circuit may be different, but related to the sampling circuit, e.g. a transformed version of the training circuit. Examples are described hereunder in more detail.

The approach illustrated in **Fig. 4** is different compared to conventional QGM schemes depicted in **Fig. 3** where samples obtained from quantum hardware are required to estimate the model probability distribution $p_{model}(x)$. Standard classical simulators used to calculate the model probability density function $p_{model}(x)$ rely on exact calculation or accurate approximation of the probability density and the gradients of the probability densities. Several methods based on automatic differentiation have been developed, which calculate the gradients analytically. An example of such method is described in the article by Xiu-Zhe Luo et al., *Extensible, Efficient Framework for Quantum Algorithm Design,* Quantum 4, 341 (2020). However, these methods are not classically scalable and have exponential complexity with the number of qubits.

To address this problem, the embodiments in this disclosure use quantum circuits which are suitable for training a quantum model as a quantum sampler classically in polynomial time, while the generation of samples using the trained quantum model is still classically hard problem. This means that such samples can only be generated using computational resources which grow exponentially in the number of qubits. These quantum circuits, which are referred to in this application as classically trainable quantum circuits, have the property that, during training, estimation of probability densities up to an additive error may be performed by a classical computer in polynomial time with the number of qubits and the inverse of the error. This way, the training method for training a quantum model as a quantum sampler based on such quantum circuit is classically scalable with the number of qubits.

An example of a classically trainable quantum circuits for classically training a quantum model as a quantum sampler is the so-called instantaneous quantum polynomial (IQP) circuit family. IQP quantum circuits are known as candidates for quantum supremacy experiments since they have been shown to be classically hard to estimate probabilities up to a multiplicative polynomial error and also classically hard to sample from. These circuit are described in the article by Bremner et al., *'Achieving quantum supremacy with sparse and noisy commuting quantum computations',* Quantum 1, 8 (2017) and H. Pashayan et al., *'From estimation of quantum probabilities to simulation of quantum circuits',* Quantum 4, 223 (2020), which is hereby incorporated by reference into this application. Although estimating probabilities associated with execution of an IQP circuit up to a multiplicative polynomial error is classically hard, estimation of probabilities of such quantum circuit up to an additive polynomial error is classically easy, thereby making these circuits suitable for quantum generative modelling applications. This includes calculation of probabilities of a bitstring $x = (x_1, x_2,..,x_n)$ occurring at the output $p(x_1, x_2..,x_n)$ for a n-qubit system where $x_i \in \{0,1\}$ or marginal probabilities like $p(x_1, x_2..x_k)$ for some $k < n$.

The classically trainable quantum circuits as defined above need to be demarcated on the on hand from relatively simple circuit families, like Clifford circuits and match gates, which allow exact calculation of probability density in polynomial time, while determining samples based on these quantum circuits is classically easy. No quantum advantage can be obtained using such quantum circuits. On the other hand, the classically trainable quantum circuits need to be demarcated from quantum circuits that are too complex to allow classical estimation of probability amplitudes that can be used in training a quantum model as a quantum sampler. Thus, for the purpose of the embodiments in this application, a class of classically trainable quantum circuits for training a quantum model as a quantum sampler may be defined, that have the following properties:

    1. Multiplicative $\epsilon$ estimation of probabilities for this class of quantum circuits is classically hard;
    2. Additive $\epsilon$ estimation of probabilities for this class of quantum circuits is classically easy;
    3. Probability distributions generated by these families are poly-sparse.

Here, the property of poly-sparseness of a probability distribution, as described in the article by H. Pashayan et al., *From estimation of quantum probabilities to simulation of quantum circuits,* Quantum 4, 223 (2020), ensures that sampling from a quantum model that is trained based on these circuits is still classically hard. This way, a class Ξ of classically trainable quantum circuits may be defined. As mentioned above, the IQP quantum circuit family belongs to this class. Further quantum circuits having similar properties as the IQP circuits that belong to the class Ξ quantum circuits are discussed hereunder in more detail.

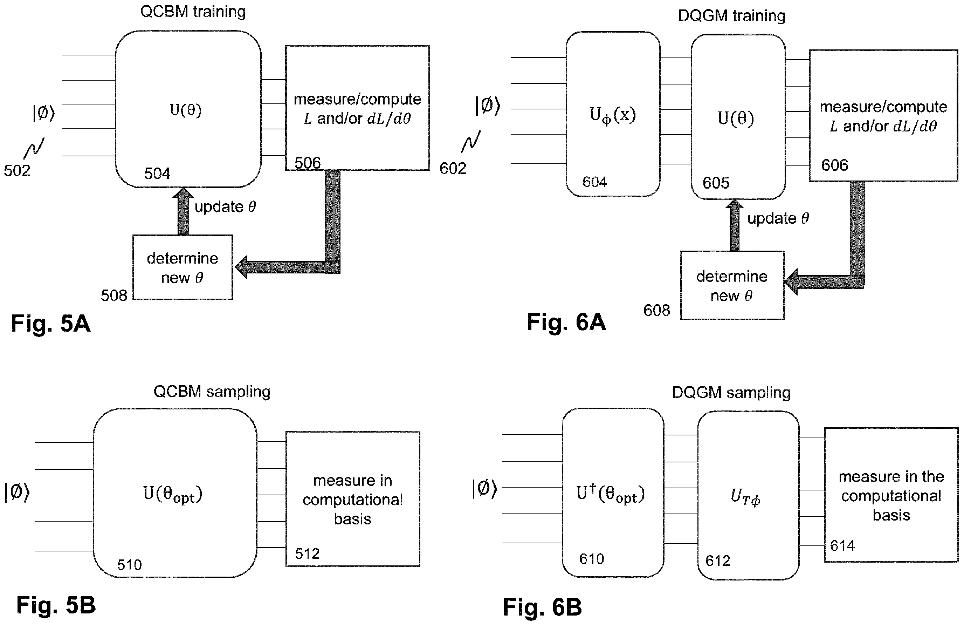

The above-described training schemes for quantum samplers may be implemented based on different quantum generative models. For example, **Fig. 5A** and **5B** illustrate the training and the sampling stage of a quantum generative model referred to as Quantum Circuit Born Machines (QCBMs). As shown in **Fig. 5A,** the input of the training stage includes an all-zero state $|\varnothing\rangle$ **502** which is then operated on by unitary $U(\theta)$ **504** with variational parameters $\theta$. In this embodiment case, the unitary may be defined as a sequence of gate operations defining a variational quantum circuit, which belong to the class Ξ of classically trainable quantum circuits as described above with reference to **Fig. 4** so that amplitude probabilities of the unitary $U(\theta)$, the loss function $L$ and/or a gradient of the loss function $dL/d\theta$ **506** may be computed classically. The gradient may be computed using the parameter-shift rule or another differentiation method. A new value of the variational parameter $\theta$ may be computed and used to configure the parameters of the unitary $U(\theta)$ so that a new loss and/or gradient of the loss function may be computed.

After optimization, the optimized parameter values $\theta_{opt}$ determined by the classical training method may be used by the sampling stage as shown in **Fig. 5B**. The same quantum circuit that was also used for the training stage may be provided with the optimized parameter values to define an optimized quantum circuit representing the unitary $U(\theta_{opt})$ **510** which may be executed on a hardware quantum register. The output of the quantum register is measured **512** in the computational basis to obtain bitstring samples. Thus, in this embodiment, both the training and the sampling stages use the same quantum circuit.

**Fig. 6A** and **6B** illustrate the training and the sampling stage of a quantum generative model referred to as differential-quantum generative models (DQGMs). The DQGM scheme is described in detail in the article by Kyriienko et al., Protocols for Trainable and Differentiable Quantum Generative Modelling, arXiv:2202.08253 (2022).

In the DQCM scheme, the training quantum circuit for training is different from the sampling quantum circuit that is used for sampling. The training quantum circuit may include a feature map $U_\phi(x)$ **604,** for encoding a continuous input variable *x* into a Hilbert space of the quantum register, and a variational circuit $U(\theta)$ **605** for variationally optimizing the quantum model.

Gate operations of the feature map may be operated on the input state $|\varnothing\rangle$ and gate operations of the variational circuit may be operated on the output of the feature map. In this embodiment, both the feature map and the variational circuit may be defined as sequences of gate operations defining quantum circuits, which belong to the class Ξ of classically trainable quantum circuits as described above with reference to **Fig. 4.** This way, amplitude probabilities associated with the execution of the training quantum circuit comprising the feature map and the variational circuit may computed classically. Similarly, the loss function $L$ and/or a gradient $dL/d\theta$ **506** may be computed classically using the parameter-shift rule or another differentiation method. Further, a new value of the variational parameter $\theta$ may be computed and used to configure the parameters of the unitary $U(\theta)$ so that a new loss and/or gradient of the loss function may be computed

After optimization, the optimized parameters $\theta_{opt}$ determined by the classical training method may be used by a sampling stage as depicted in **Fig. 6B.** In DQGM the sampling stage uses a sampling quantum circuit that is different from (but related to) the training quantum circuit that is used during the training state. As shown in the figure, the input state $|\varnothing\rangle$ is operated on by a quantum circuit representing the inverse of the unitary that was used during training with the optimized parameters, $U^\dagger(\theta_{opt})$ **610**. These operations are followed by operations of a quantum circuit $U_{T\phi}$ **612** which are linked with the feature map $U_\phi(x)$ that was used during training. In particular, $U_{T\phi}$ defines a so-called an inverse-Quantum Fourier Transform (QFT) circuit of the feature map $U_\phi(x)$. This sampling quantum circuit may be executed on a hardware quantum register and samples are then obtained by measurements **614** in the computational basis.

As shown in the figure, DQGM provides a quantum model that allows separation of the training and the sampling stages so that both can be optimized separately. This way frequency taming techniques like feature map sparsification, qubitwise learning and Fourier initialization can be used for improving and simplifying the training. Additionally, the quantum circuits of the DQGM scheme are differentiable thereby naturally allowing quantum generative modelling of probability distributions that are solutions to stochastic differential equations.

The training part of a DQGM comprises a feature map $U_\phi(x)$ (sometimes referred to as a kernel) and a variational circuit $U_\theta$. In an embodiment, the kernel $U_\phi(x)$ may include rotation and Hadamard operations. For example, the kernel may be defined as:

$$U_\phi(x) = \prod_{i=1}^N [R_i^z\left(\frac{2\pi x}{2^i}\right) H_i] \qquad (1)$$

wherein $R_i^Z$ are single qubit Z-rotations gate operations and $H_i$ are single qubit Hadamard gate operations. The feature map maps (encodes) an initial state $|\varnothing\rangle$ to a state $|\tilde{x}\rangle$ which is a latent space representation of the coordinate x. The transform $U_{T\phi}$ transforms the latent space representation as a bijection to the state $|x\rangle$. Hence, this quantum circuit is dependent on the feature map $U_\phi(x)$ and for a phase-feature map given be equation 1 and represents an inverse-Quantum Fourier transform. The operations during the training stage can be described as follows:

$$|\varnothing\rangle \xrightarrow{U_\phi(x)} |\tilde{x}\rangle \xrightarrow{U_{T\phi}} |x\rangle \xrightarrow{U_\theta U_{T\phi}^\dagger} P_{train}(0^{\otimes n}) \tag{2}$$

Similarly, the operations during the sampling stage can be described as follows:

$$|\varnothing\rangle \xrightarrow{U_{T\phi} U_\theta^\dagger} P_{sampling}(|x\rangle\langle x|) \tag{3}$$

where measurements in the computational basis are performed to generate samples. It can be shown that for a given variable x, $P_{train}(0^{\otimes n}) = P_{sampling}(|x\rangle\langle x|)$. This means that the probability of obtaining $|0\rangle^{\otimes n}$ (n zero states) at the output of the training stage for a particular bitstring x is the same as the probability of obtaining bitstring x at the output of the sampling stage. Hence, this embodiment, $U_\theta$ may be classically trained for a particular probability distribution so that that $P_{train}(0^{\otimes n}) = p_{target}(x)$ for all x. This way, the sampling stage will automatically generate samples from that probability distribution.

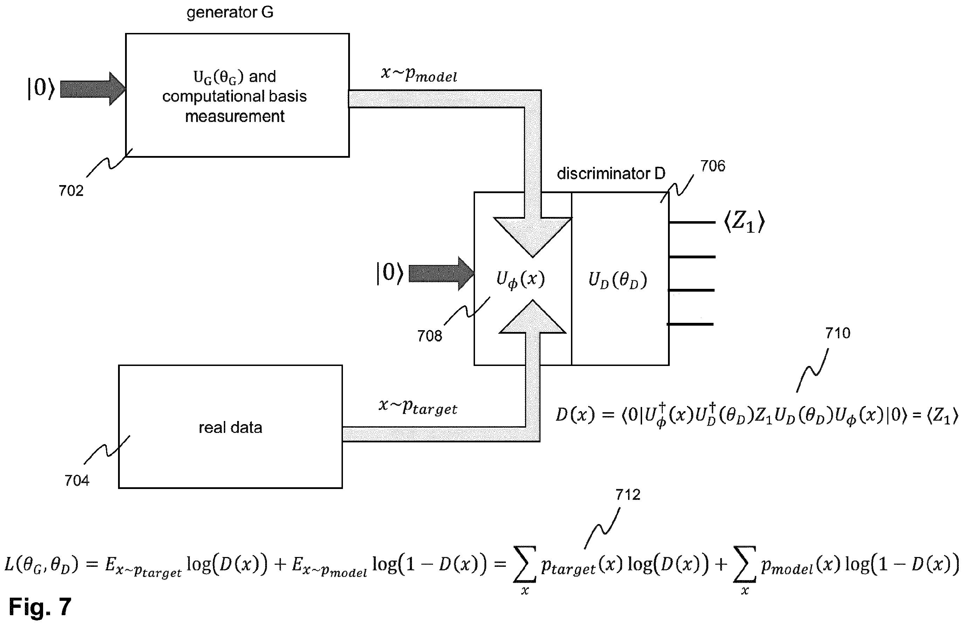

**Fig. 7** shows a schematic for classical training a quantum model as a quantum sampler according to an embodiment. In this embodiment, the quantum model may be trained based on a so-called quantum generative adversarial network QGAN. As shown in the figure, the QGAN may include a generator $G$ **702** implementing a unitary $U_G(\theta_G)$ along with measurements in the computational basis to produce a model probability distribution's probability density function $p_{model}(x)$, which may be input to a discriminator $D$ **706**. The discriminator is further configured to receive data **704** associated with a target probability density function $p_{target}(x)$. The discriminator **706** may be implemented based on unitaries $U_\phi(x)U_D(\theta_D)$ where $U_\phi(x)$ **708** represents a feature map for encoding the classical data x. The discriminator may be configured to produce a binary output "real" or "fake" based on a measurement $D(x)$ **710** of a single qubit in the computational basis. The training further includes optimizing a loss function **712**.

Classical training of the discriminator is possible if the target probability density function $p_{target}(x)$ is known and if unitaries $U_G(\theta_G)$ and $U_\phi(x)U_D(\theta_D)$ are represented as quantum circuits which belong to the class $\Xi$ of classically trainable quantum circuits as described above with reference to **Fig. 4.** Hence, these quantum circuits comply with the three conditions as listed above: 1) multiplicative error estimation of the probability density is classically hard; 2) additive error estimation of the probability density is classically easy and 3) the probability distribution is poly-sparse. The gradients with respect to optimization parameters $\theta_G$, $\theta_D$ can also be classically estimated using the parameter-shift rule.

It is submitted that the class $\Xi$ of classically trainable quantum circuits which can be used in the embodiments of this application is not limited to only IQP-based quantum circuits but includes further quantum circuits. For example, the class of circuits may include extended versions of IQP circuits which still can be used to classically estimate probabilities efficiently up to an additive polynomial error. These extended IQP circuits may express a broader class or at least a different class of functions than conventional IQP circuit. However, this is only possible if the entanglement of qubits in the quantum register is constrained. To understand this, the concept of connectivity in graph theory may be used.

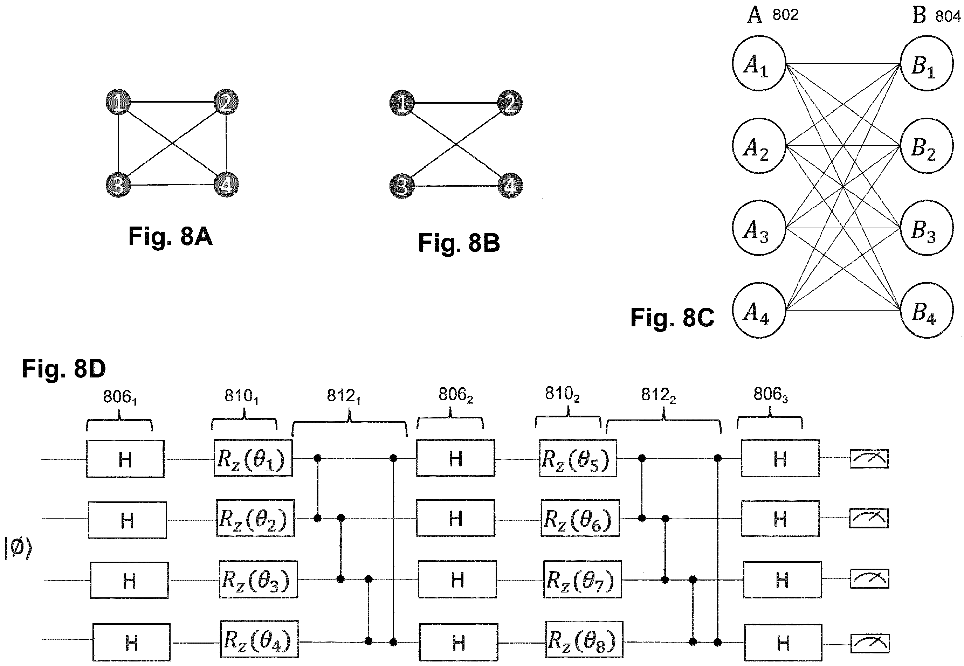

Examples of such graphs are depicted in **Fig. 8A-8C** wherein each node of a graph G represents a qubit in a quantum circuit. Two nodes are connected by an edge if there is a two-qubit entangling gate between corresponding qubits in the circuit. IQP circuits may have all-to-all connectivity, using for example two-qubit entangling gates as shown in **Fig. 8A.** In that case, probabilities of the qubits cannot be computed classically. However, if the connectivity of qubits in a quantum circuit is restricted such that the resulting connectivity graph is bi-partite, probabilities can be obtained up to an additive polynomial error classically efficiently. This is for example described in the article by S. Bravyi et al., Classical algorithms for Forrelation, arXiv:2102.06963v2 (2021).

More generally, when a connectivity graph can be partitioned into two disjoint subsets such that the tree-decomposition of each of the subsets has a small tree-width, then a classical algorithm for estimating the probability up to an additive polynomial error is possible with a run time of $O(n4^w \varepsilon^{-2})$, where w is the maximum tree-width of the decompositions. Here, The tree decomposition may be done using the following set of rules: a graph G = $(V, E)$, where $V$ is the set of vertices and E is the set of edges of the graph, can be associated with a tree decomposition $T = (W,F)$, where $W$ is the set of vertices in $T$ and $F$ is the set of edges along with a bag $B_i$ for each node $i \in W$, such that:

1) for every vertex in *V,* there exists a node $i \in W$, such that vertex lies in bag $B_i$; 2) for each edge $e \in E$, there is a node $i \in W$ such that both the end-points of $e$ are in $B_i$; and, 3) the subgraph obtained by considering all nodes in $W$ whose bag contain a certain vertex from *V*, is a tree. The width of the tree-decomposition can be defined as $w = \max_{i \in W} |B_i| - 1$ or $w = \max_{i \in W} |B_i|$.

For a bipartite graph such partition is possible wherein the tree-width is fixed at "1" independently of the number of qubits. **Fig. 8B** depicts bipartite graph for 4-nodes and **Fig. 8C** depicts a bipartite graph including two sets of nodes A **802** and B **804** wherein two nodes are connected if and only if one node belongs to set A and the other to set B. The connections between the nodes represent a two-qubit gate operation applied to the corresponding qubits.

**Fig. 8D** shows an example of an extended-IQP circuit including four qubits, wherein the entanglement of the qubits in the quantum register is constrained to the 4-node bipartite graph of **Fig. 8B**. The circuit includes a central Hadamard (*H*) layer **806$_2$**, with $R_z$ and $R_{zz}$ gates **810$_{1,2}$,812$_{1,2}$** located on the left and right of the central *H* layer and further Hadamard layers **806$_{1,3}$** at the input and output end of the quantum circuit respectively. All the $R_z$ and $R_{zz}$ gates on left commute with each other and all the $R_z$ and $R_{zz}$ gates on right commute with each other. For the extended-IQP circuits, it is (implicitly) assumed that the 2-qubit connectivity in these circuits can be defined in terms of bi-partite graphs. This means that there is a two-qubit gate between two qubits if and only if there is an edge in the corresponding connectivity graph. These circuits allow efficient classical estimation of a quantity referred to as the forrelation $\Phi$ which is defined as:

$$\Phi = \langle 0^{\otimes n} | H U_2 H U_1 H | 0^{\otimes n} \rangle \qquad (4)$$

where $U_1$, $U_2$ are sets of single and two-gate operations $R_z$, $R_{zz}$ and *H* is the single-gate Hadamard operation. The forrelation $\Phi$ represents the amplitude to have an all zero state at the output of the extended-IQP circuit when the input is $|0^{\otimes n}\rangle$.

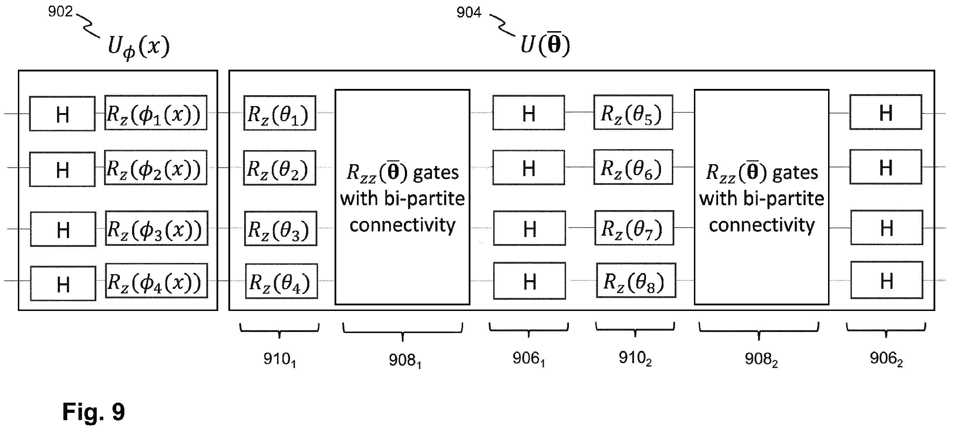

Extended IQP circuits may be used in different quantum generative modelling schemes. For example, when using a DQGM scheme, a feature map and a variational circuit may be implemented based on an extended-IQP circuit that includes a sequence of (parameterized) rotation gate operations and Hadamard gate operation followed by measurements in the computational basis. **Fig. 9** illustrates different components of an extended IQP circuit in a DQGM scheme according to an embodiment of the invention. As shown in the figure, the circuit includes an *x*-dependent feature map **902** comprising a layer of Hadamard gates and a layer of rotation gates and a variational ansatz **904** (or a $\theta$-dependent trainable circuit) comprising a central Hadamard layer **906$_1$** and layers of parameterized single-gate rotation operators **910$_{1,2}$** and layers of parameterized two-gate rotation operators **908$_{1,2}$** on both sides of the Hadamard layer. Here, the parameterized two-gate rotation operators $R_{zz}(\overline{\theta})$ may have bipartite connectivity. A further Hadamard layer **906$_2$** may be located at the output end of the circuit. The Hadamard layer and rotations layers of the feature map and the Hadamard layers and rotations layers of the variational circuit may form an extended IQP circuit that is similar to the extended IQP circuit described with reference to **Fig. 8D**.

As already explained earlier, in the DQGM training stage the probability of obtaining $|0\rangle^{\otimes n}$ (*n* zero states) at the output of the training stage for a particular bitstring *x* is the same as the probability of obtaining bitstring x at the output of the sampling stage, i.e.: $p_{model}(x) = P_{training}(0^{\otimes n})$. Further, from Eq. 4 it follows that $P_{training}(0^{\otimes n}) = |\Phi|^2$ for a training stage that is based on an extended-IQP circuit. Since $\Phi$ and consequently $|\Phi|^2$ can be estimated classically efficiently, $p_{model}(x)$ can be estimated efficiently as well since $p_{model}(x) = P_{training}(0^{\otimes n}) = |\Phi|^2$.

In the QCBM setting, in which output probabilities for various values of x are computed directly to estimate $P_{model}(x)$ (and not just the probability of obtaining $|0^{\otimes n}\rangle$ as for the training stage of DQGM) equation (4) may be rewritten in the following way:

$$\Phi(x) = \langle x | H U_2 H U_1 H | 0 \rangle = \langle 0 | \prod_{i=1}^{k} X_i H U_2 H U_1 H | 0 \rangle = \langle 0 | H \prod_{i=1}^{k} Z_i U_2 H U_1 H | 0 \rangle \quad (5)$$

where the following commutation relation is used: *XH = HZ*. This equation provides the amplitude to obtain a certain bitstring x at the output of a QCBM circuit. The last term of equation (5) describes an output of extended-IQP circuit and thus can be classically estimated efficiently. Hence, also in a QCBM setting, the model probability density function $p_{model}(x)$ can be estimated efficiently.

For the extended-IQP circuit, it is possible to compute more general expectation values. For example, consider the expectation value of operator $\Lambda = \Sigma Z_i Z_j$ where *i,j* index the qubits (which is a term that is very similar to an Ising Hamiltonian). IN that case, for an extended-IQP circuit, the following expression can be written:

$$\langle\Lambda\rangle = \sum_{ij}\langle 0^{\otimes N}|HU_p^\dagger HU_q^\dagger H\, Z_i Z_j HU_q HU_p H|0^{\otimes N}\rangle \tag{6}$$

When considering a single term $Z_1 Z_2$ in the summation and writing $I_{12} = \Sigma_{a,b\in\{0,1\}}|z_a z_b\rangle\langle z_a z_b|$, this term can be written as:

$$\langle Z_1 Z_2\rangle =$$

$$\sum_{a,b,c,d\in\{0,1\}}\langle 0^{\otimes N}|HU_p^\dagger H|z_a z_b\rangle\langle z_a z_b|U_q^\dagger HZ_1 Z_2 HU_q|z_c z_d\rangle\langle z_c z_d|HU_p H|0^{\otimes N}\rangle \tag{7}$$

Hence, more generally, a single term in the summation can be written as:

$$\langle z_a z_b|U_{12}|z_a z_b\rangle\langle 0^{\otimes N}|HU_p^\dagger H|z_a z_b\rangle\langle z_c z_d|HU_p H|0^{\otimes N}\rangle \tag{8}$$

where $U_{12} = U_{q,12}^\dagger H_1 H_2 Z_1 Z_2 H_1 H_2 U_{q,12}$ with $H_i$ being the Hadamard gate acting on qubit $i$ and the terms in $H$, $U_q$, which do not contain terms for qubits 1 and 2, commute through $Z_1, Z_2$ and meet their conjugates and are converted to identity. This term can be classically calculated efficiently since it is only a two-qubit overlap integral. The second term in the above product can be written as:

$$\langle 0^{\otimes N}|HU_p^\dagger \hat{\delta} U_p H|0^{\otimes N}\rangle \tag{9}$$

where $\hat{\delta} = H|z_a z_b\rangle\langle z_c z_d|H$, which is a tensor product operator. Bravyi et al. (cited above) proved that this term can also be calculated classically efficiently. Hence $\langle Z_1 Z_2\rangle$ and consequently $\langle\Lambda\rangle$ can be calculated classically efficiently. In the same way, it can be shown that expectation values for operators like $\Sigma Z_i$ can also be estimate classically efficiently. As a consequence, various expectation values and thus different loss/cost functions can be estimated classically efficiently up to additive polynomial error.

Hence, hence form the above it follows that the extended-IQP circuits can be classically trained using not just probability densities, but also a variety of cost functions based on measured expectation values of different observables. Such property may be useful when sampling bit strings which are associated with minimizing a certain Hamiltonian, e.g. an Ising Hamiltonian, in the loss function.

Also the gradients of probability densities, both with respect to $\theta$ and $x$ can be calculated efficiently for extended-IQP circuits. Here a DQGM setting is assumed, especially in the context of differentiating with respect to $x$. For an extended-IQP circuit the probability having an output $|0^{\otimes n}\rangle$, i.e. $p_{model}(x) = p(0) = Tr[|0^{\otimes n}\rangle\langle 0^{\otimes n}|\rho_{out}]$ can be classically estimated efficiently. Assuming a gate $U_{2,j} = e^{\frac{i\theta_j P_j}{2}}$ in $U_2$ where $P_j$ are the Pauli operators, then the gradients using parameter-shift rule can be written as:

$$\frac{\partial p_{model}(x)}{\partial\theta_j} = Tr[|0^{\otimes n}\rangle\langle 0^{\otimes n}|HU_{2,l:j+1}U_{2,j}\left(\frac{\pi}{2}\right)\rho_j U_{2,j}^\dagger\left(\frac{\pi}{2}\right)U_{2,l:j+1}^\dagger H] -$$

$$Tr[|0^{\otimes n}\rangle\langle 0^{\otimes n}|HU_{2,l:j+1}U_{2,j}\left(-\frac{\pi}{2}\right)\rho_j U_{2,j}^\dagger\left(-\frac{\pi}{2}\right)U_{2,l:j+1}^\dagger H] \tag{10}$$

where $\rho_j = U_{2,1:j}HU_1 H|0\rangle\langle 0|HU_1^\dagger HU_{2,1:j}^\dagger$. Since both terms in Eq. 10 are probabilities of $|0^{\otimes n}\rangle$ of an extended-IQP circuit, they can be classically estimated efficiently. A similar approach also works for IQP circuits. To see how $\frac{\partial p_{model}(x)}{\partial x}$ can be calculated efficiently, $U_1$ may be written as $U_1 U_\phi(x)$. Suppose $U_\phi(x)$ consists of gates of the type

$U_{\phi,j} = e^{\frac{i\phi_j(x)P_j}{2}}$ , then the following expression can be written:

$$\frac{\partial p_{model}(x)}{\partial x} =$$

$$\sum_{j=1}^{k}\left[\frac{\partial \phi_j(x)}{\partial x}Tr[|0^{\otimes n}\rangle\langle 0^{\otimes n}|HU_2HU_1U_{\phi,j+1:l}U_{\phi,j}\left(\frac{\pi}{2}\right)\rho_j U_{\phi,j}^{\dagger}\left(\frac{\pi}{2}\right)U_{\phi,j+1:l}^{\dagger}U_1^{\dagger}HU_2^{\dagger}H] -$$

$$\frac{\partial \phi_j(x)}{\partial x}Tr[|0^{\otimes n}\rangle\langle 0^{\otimes n}|HU_2HU_1U_{\phi,j+1:l}U_{\phi,j}\left(-\frac{\pi}{2}\right)\rho_j U_{\phi,j}^{\dagger}\left(-\frac{\pi}{2}\right)U_{\phi,j+1:l}^{\dagger}U_1^{\dagger}HU_2^{\dagger}H]] \qquad (11)$$

where $k$ is the number of terms with functional dependence on x and $\rho_j = U_{\phi,1:j-1}H|0\rangle\langle 0|HU_{\phi,1:j-1}^{\dagger}$ . Since each of the terms in the above summation is probability of $|0^{\otimes n}\rangle$ of an extended-IQP circuit, they can be classically estimated efficiently.

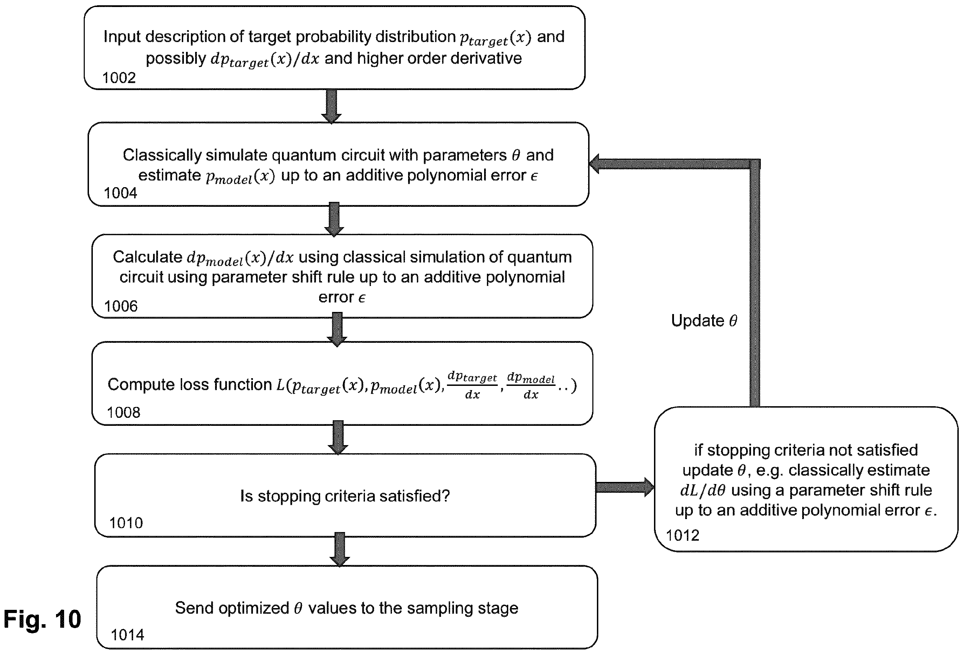

**Fig. 10** illustrates steps for classical training a quantum model as a quantum sampler according to an embodiment of the invention. Input information **1002** may include a target probability distribution or information to determine a target probability. Further, the input information may include first order and higher order derivatives of the target probability density function with respect to $x$. The quantum circuit with parameters $\theta$ may be simulated classically to estimate amplitudes and to estimate a model probability density function $p_{model}(x)$ **1004** up to an additive polynomial error $\epsilon$. In the DQGM scheme, the derivatives with respect to x may also be calculated classically efficiently up to an additive polynomial error $\epsilon$ using parameter shift rule **1006**. The loss function which may depend on the probability density function and its derivatives with respect to variable x may be computed **1008**. If the stopping criteria is not satisfied **1010,** then an updated variational parameter $\theta$ may be computed. For example, gradients with respect to parameters $\theta$ may be computed classically using the parameter shift rule **1012** up to an additive polynomial error $\epsilon$. Hence, for gradient-based training, gradients also up to an additive polynomial error may be computed classically. If the stopping criterium is satisfied, then the optimized values of the variational parameter $\theta$ may be sent to the sampling stage **1014.**

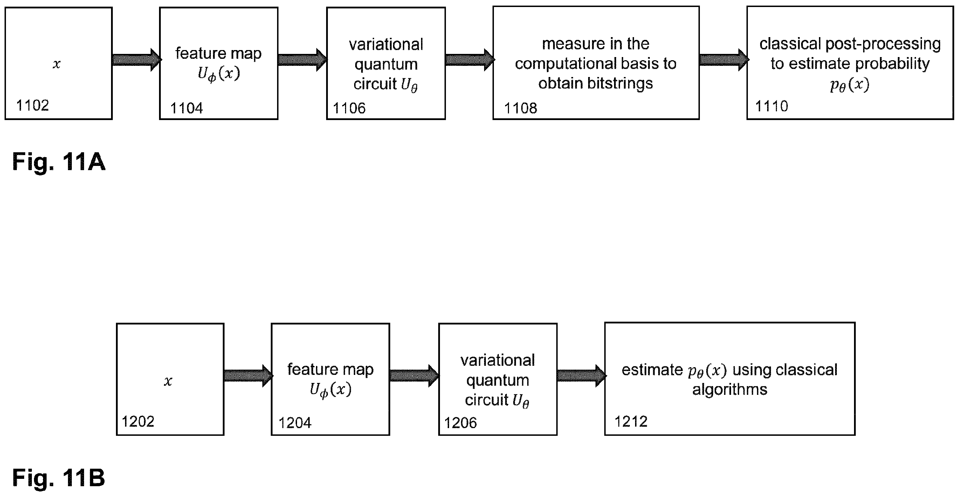

**Fig. 11A** and **11B** illustrate a schematic for estimation of a model probability density function $p_{model}(x)$ either using a quantum method **(Fig. 11A)** or a classical method **(Fig. 11B)**. As shown in **Fig. 11A**, feature map $U_\phi(x)$ **1104** may act on variable $x$ **1102,** which is represented as a bitstring, to generate a latent space representation of variable $x$. Further, variational circuit $U_\theta$ **1106** may acts on the latent space representation to a generate an output state $|\psi\rangle$, which - when measure upon in the computational basis **1108** - generates bitstring samples. These samples then can be classically postprocessed to estimate a probability density function $p_\theta(x)$ **1110**. In the QCBM setting, this corresponds to estimate $p_\theta(x)$ by measuring $\langle\psi|x\rangle\langle x|\psi\rangle$. In the DQGM setting, this corresponds to estimate $p_\theta(x)$ by measuring $\langle\psi|0\rangle\langle 0|\psi\rangle$. This estimation is typically up to an additive error $\epsilon$. For **Fig. 11B,** given the circuit description of $U_\phi$ and $U_\theta$, classical methods, typically Monte-Carlo based approaches are used to estimate $p_\theta(x)$ up to an additive error $\epsilon$ **1112.** In both cases, the run time goes as $\sim poly(1/\epsilon)$

To prove that a family of circuits, while allowing additive polynomial estimation of amplitude probabilities, is still hard to sample from, it should be proven that probabilities generated from these circuits are not poly-sparse. Two different approaches may be used to prove that quantum circuits are not poly-sparse. One approach involves random sampling of these circuits and looking at their anti-concentration properties. By anti-concentration, reference is made to the fact that most of the probability distributions generated by these quantum circuits will be well spread out. Formally, an output distribution of a unitary $U$ for some setting of its parameters is said to anti-concentrate when:

$$Pr_{U\sim\mu}\left(|\langle x|U|0\rangle|^2 \geq \frac{\alpha}{N}\right) \geq \beta \qquad (12)$$

where $N = 2^n$ and where $\alpha$, $\beta$ are constants with $0 \leq \alpha \leq 1$ and $\mu$ is a certain random measure. For e.g., Aruteet *al.* show in their article 'Quantum supremacy using a programmable superconducting processor, Nature 574, 505-510 (2019) a class of families for which $\beta = \frac{1}{e}$ . The probability distributions of these circuits converge to the Porter-Thomas distribution. In the article by H. Pashayan et al., Quantum 4, 10.22331/q-2020-01-13-223 (2020), it was proven that anti-concentration and poly sparsity cannot coexist. Thus, if it is shown that probability distributions from a family of quantum circuit anti-concentrate, then one can conclude that the probability distributions are not poly-sparse and hence are hard to sample from. The above approach is used to study circuits for up to 20-25 qubits. For larger number of qubits one may use the fact that the probability distributions converge to the Porter-Thomas distribution and use the cross-entropy difference to approximately measure the distance with the Thomas-Porter distribution. The cross-entropy difference is defined as:

$$\Delta H\left(p_{samp}\right) \approx H_0 - \frac{1}{m}\sum_{j=1}^{m}\log\frac{1}{p_U(x_j^{samp})} \qquad (13)$$

where $H_0 = logN + \gamma$ where $\gamma \approx 0.577$ is Euler's constant. Here, $p_U(x_j^{samp})$ means only the probabilities of samples generated have to computed using a classical computer

The error in $\Delta H(p_{samp})$ is given by $\kappa/\sqrt{m}$, where $\kappa \approx 1$ and $m$ is the number of samples. Thus, providing a way of generating a finite number of samples, the distribution can be approximately characterized without having to calculate all the probabilities. This is especially useful for qubits $\geq 25$ where calculating all the probabilities (which would be needed to measure anti concentration or sparsity) using wavefunctions rapidly becomes unfeasible.

Apart from using anti-concentration, one also can measure whether a probability distribution is poly-sparse or not by measuring the number of terms needed to $\epsilon$- approximate it by using a sparse distribution. A $t$-sparse distribution, with only $t$ non-zero terms, can $\epsilon$- approximate a probability distribution $P(X)$ if and only if $\Sigma_x|P(x) - P_t(x)| \leq \epsilon$. Here $P_t(x)$ is the probability distribution containing the highest $t$ terms from P($x$) as the non-zero terms. It is known that for $\epsilon = 0$, $t$ = $N$, where $N = 2^n$, with $n$ as the number of qubits. Therefore, the behavior of $t$ can approximated as $t(\epsilon) = N(1 - f\left(\frac{1}{\epsilon}\right))$, where $f$ is a function exhibiting polynomial behavior for a poly-sparse distribution and exponential behavior $f \sim e^{-1/\epsilon}$ for a non poly-sparse distribution. Therefore, after calculating $t$ for different values of $\epsilon$ one can calculate $f\left(\frac{1}{\epsilon}\right) = 1 - t/N$ and plot this as a function of $1/\epsilon$.

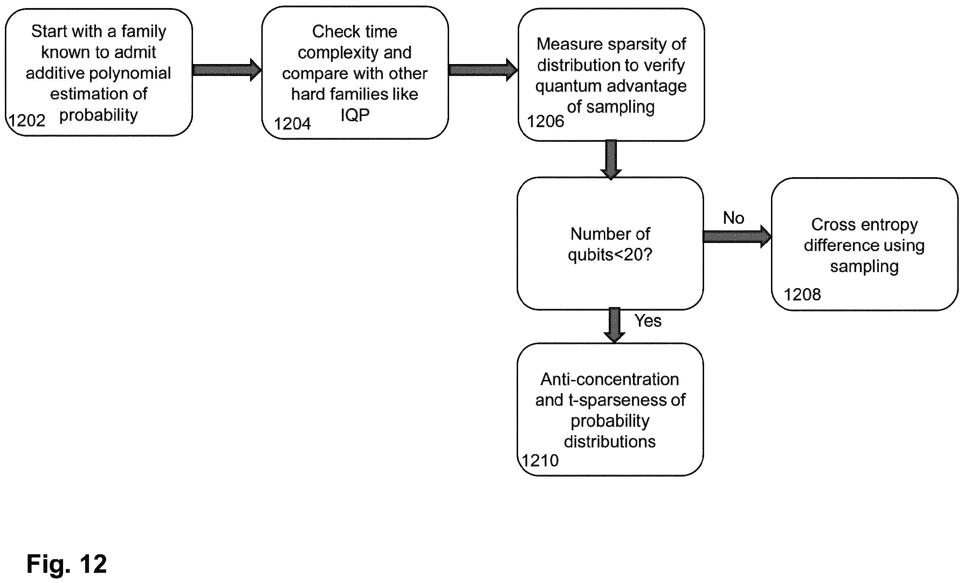

**Fig. 12** shows a schematic to numerically test that a certain quantum circuit family is classically trainable while also being classically hard to sample from. One may start with a family of circuits **1202** known to allow additive polynomial estimation of probability. To make sure that the computational complexity of exact probability calculation for the given family is classically hard, it may be compared **1204** with known families for which it is classically hard to compute exact probabilities. To verify that the circuit family is hard to sample from, sparsity of probability distributions generated by these circuits may be studied **1206.** For numbers of qubits greater than 20, one may use cross entropy difference using samples **1208.** For numbers of qubits less than 20, one may generate instances of probability distributions of these circuits and study anti-concentration properties and t-sparseness **1210.**

To study resource requirements of various circuit families tensor networks may be used to represent the quantum circuits. Tensor networks use tree based decomposition to estimate the time-complexity of calculating probabilities. This is basically done by estimating the size of the largest tensor during the contraction process. The maximum size depends on the contraction order and various well-known algorithms may be used to find the contraction order which gives the smallest such tensor size.

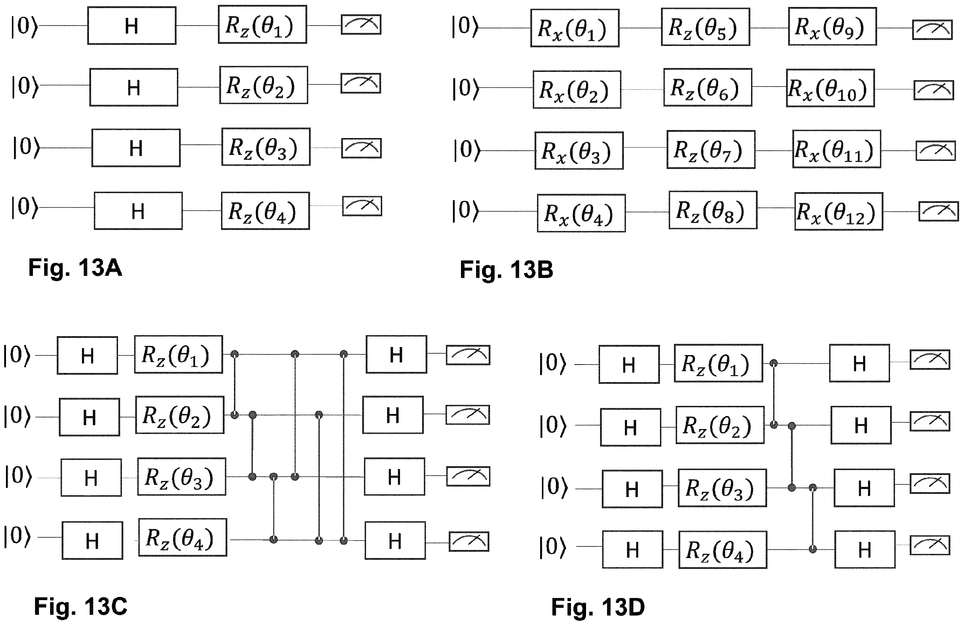

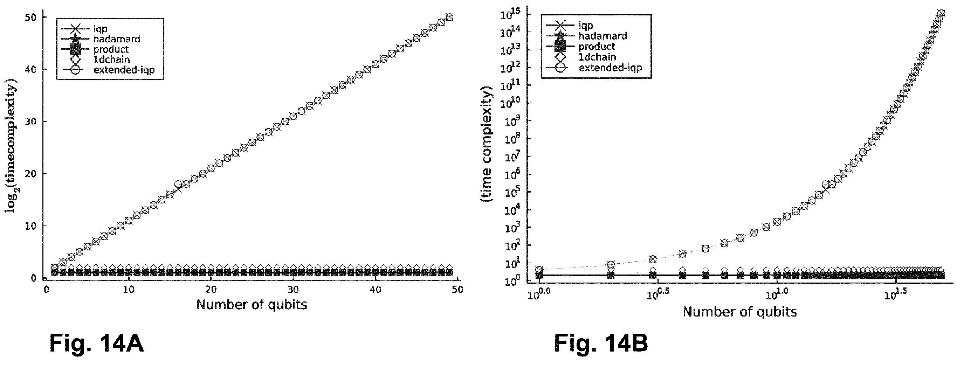

**Fig. 13A-13D** shows different architectures studied for the complexity studies including Hadamard **(Fig. 13A),** Product **(Fig. 13B),** IQP **(Fig. 13C)** and IQP 1d-chain **(Fig. 13D). Fig 14A** and **14B** show the time-complexity for different families of circuits in the log scale and log-log scale. For IQP and extended-IQP exponential behavior is observed by a straight line of non-zero slopes and a curve with upward curvature in the log-log plot. These plots have been generated using Julia libraries Yao, YaoToEinsum, OMEinsum and OMEContractionOrder.

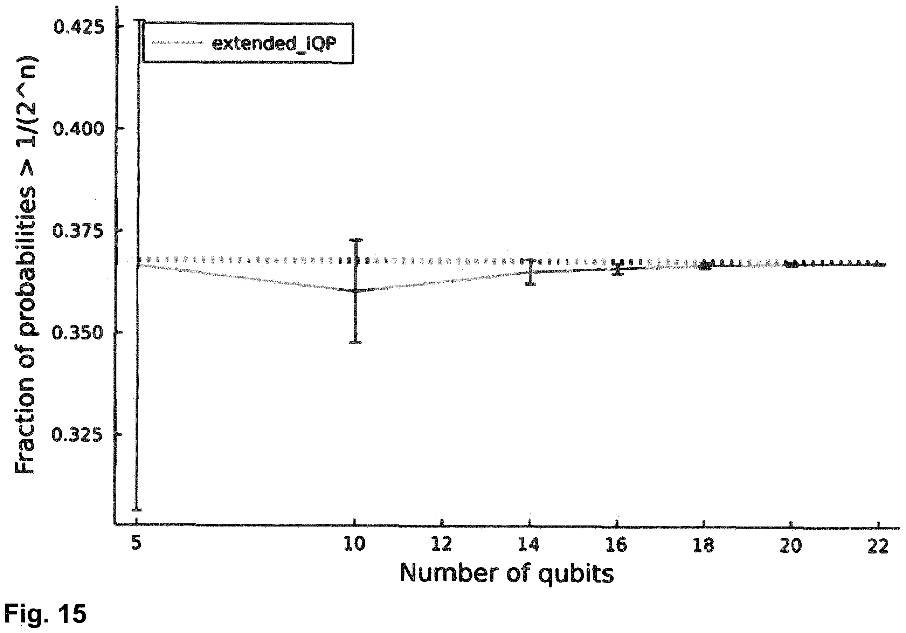

**Fig. 15** shows the anti-concentration properties of an extended-IQP circuit which has a bipartite connectivity graph. The fraction of probabilities $\geq 1/2^n$ is very close to 1/e which is shown by dotted line. To generate these plots, 100 random instances are chosen for $U_1$, $U_2$. The angles for each of the rotation gates is chosen as $k\pi/8$ where $k$ is uniformly randomly chosen between [0,1, ...,7]. From the plot we see that the extended-IQP circuits show anti-concentration behavior which means the probability distributions they generate are not poly-sparse.

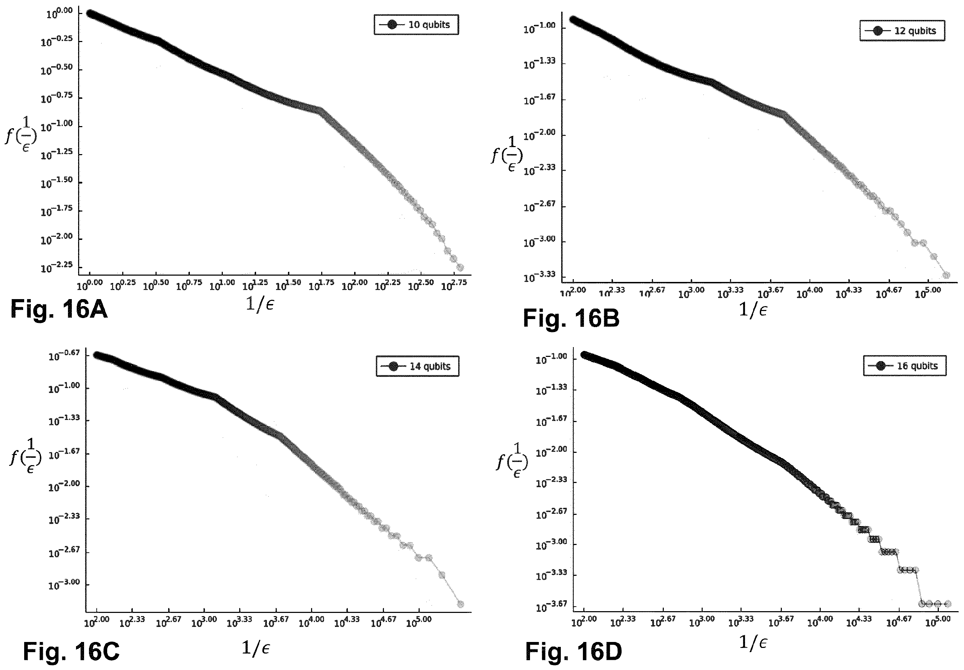

**Fig. 16A-16D** illustrate sparseness measurements for a random probability distribution for an extended-IQP circuit for different numbers of qubits. In particular, these figures show plots of $f\left(\frac{1}{\epsilon}\right)$ vs $\frac{1}{\epsilon}$ for a random probability distribution for different number of qubits as a log-log plot for 10 qubits **(16A),** 12 qubits **(16B),** 14 qubits **(16C)** and 16 qubits **(16D).** The downward curvature is an indication of super-polynomial behavior of $f\left(\frac{1}{\epsilon}\right)$, which indicates that the probability distribution is not poly-sparse.

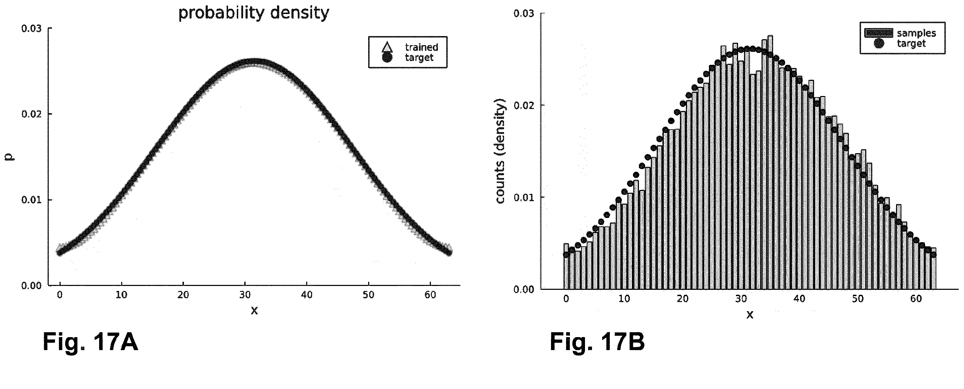

**Fig. 17A** shows results for training a quantum model using a DGQM setting for an extended-IQP circuit to generate a Gaussian probability density function based on 6 qubits. The figure shows an excellent fit between the trained and the target distribution. The training has been performed using 128 points and a phase feature map (Eq. 1). **Fig. 17B** shows the result of using the trained circuit in the training-stage to generate samples. The plot shows count density for 20,000 shots.

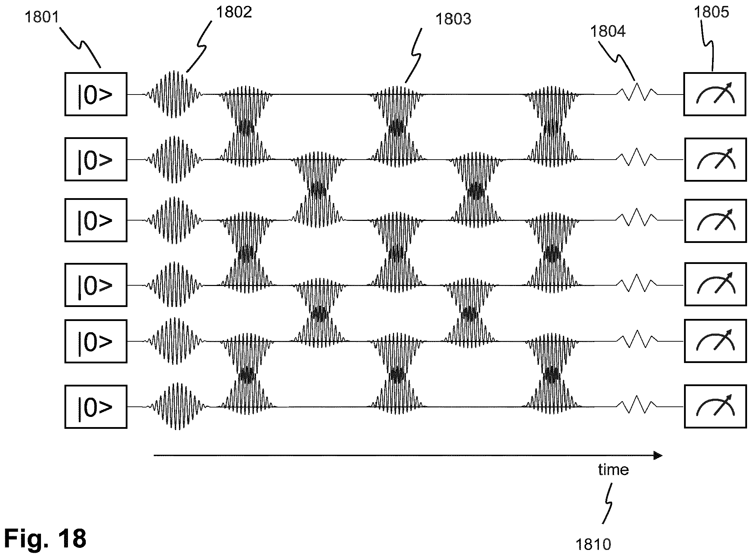

**Fig. 18** is a hardware-level schematic of a quantum register configured to execute gate operations defined in a quantum circuit. Unitary operators, e.g. those to encode the feature map and derivatives thereof, can be decomposed into a sequence of logical gate operations. These logical gate operations are transformations in a quantum Hilbert space over the qubits encoding an input parameter. In order to transform the internal states of these qubits, a classical control stack is used to send pulse information to a pulse controller that affects one or more qubits. The controller may send a sequence of such pulses in time and for each qubit independently. An initialization pulse is used to initialize the qubits into the $|0\rangle$ state **1802**. Then, for example a series of single-qubit pulses is sent to the qubit array in **1804**, which may apply a single-layer feature map. Additionally, two-qubit pulse sequences can be used to effectively entangle multiple qubits with a feature map **1806**. The duration, type, strength and shape of these pulses determine the effectuated quantum logical operations. Feature **1808** in the schematic indicates a 'break' in the depicted timeline, which means the sequence of gates may be repeated in a similar fashion in the direction of the time axis **1812**. At the end of the pulse sequences, one or more of the qubits are measured **1810**.

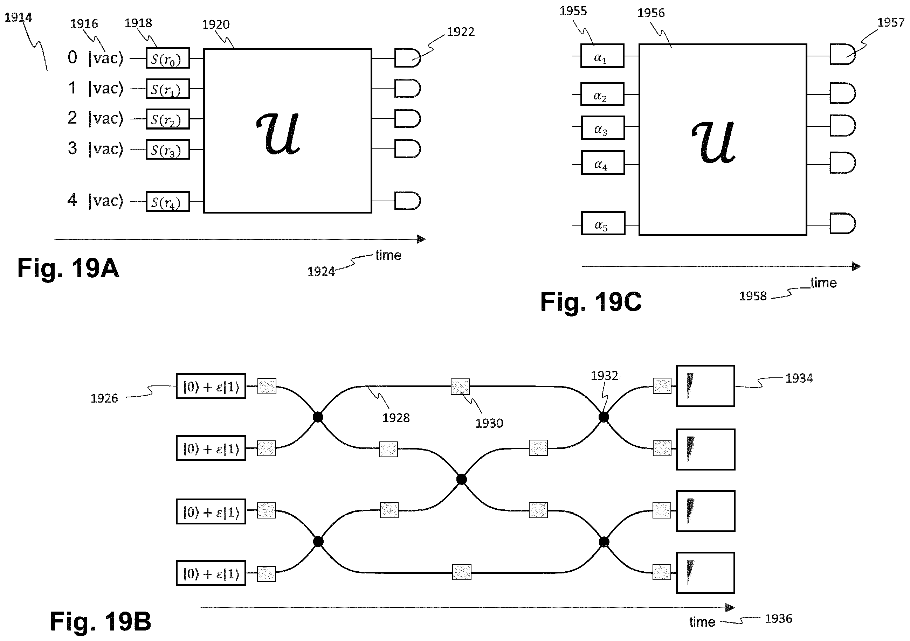

**Fig. 19A** is a hardware-level schematic of a photonic/optical quantum processor. Unitary operators, e.g. those used to encode the quantum kernel feature map and derivatives thereof, can be decomposed into a sequence of optical gate operations. These optical gate operations are transformations in the quantum Hilbert space over the optical modes. In order to transform the internal states of these modes, a classical control stack is used to send pulse information to a pulse controller that affects one or more modes. The controller may formulate the programmable unitary transformations in a parameterized way. Initially the modes **1914** are all in the vacuum state **1916**, which are then squeezed to produce single-mode squeezed vacuum states **1918**. The duration, type, strength and shape of controlled-optical gate transformations determine the effectuated quantum logical operations **1920**. At the end of the optical paths, one or more modes are measured with photon-number resolving, Fock basis measurement **1922**, tomography or threshold detectors.

**Fig. 19B** is a hardware-level schematic of a Gaussian boson sampling device. Unitary operators, e.g. those used to encode the quantum kernel feature map and derivatives thereof, can be decomposed into a sequence of optical gate operations. These optical gate operations are transformations in the quantum Hilbert space over the optical modes. In order to transform the internal states of these modes, a classical control stack is used to send information to optical switches and delay lines. The controller may formulate the programmable unitary transformations in a parameterized way. Initially the modes **1926** are all in a weak coherent state, which is mostly a vacuum state with a chance of one or two photons and negligibly so for higher counts. Subsequently, the photons travel through optical waveguides **1928** through delay lines **1930** and two-mode couplers **1932** which can be tuned with a classical control stack, and which determines the effectuated quantum logical operations. At the end of the optical paths, one or more modes are measured with photon-number resolving **1634**, or threshold detectors.

**Fig. 19C** is a hardware-level schematic of another photonic/optical quantum processor. The quantum model can be decomposed into a sequence of optical gate operations. These optical gate operations are transformations in the quantum Hilbert space of the photons. In order to transform the internal states of these photons, a classical control stack is used to send information to a universal multiport interferometer. The controller may formulate the programmable unitary transformations in a parameterized way. Initially the photons **1955** are in Fock states, weak coherent states or coherent states. The duration, type, strength and shape of controlled-optical gate transformations determine the effectuated quantum logical operations **1956**. At the end of the optical paths, the modes are measured with photon-number resolving, Fock basis measurement **1957**, tomography or threshold detectors.

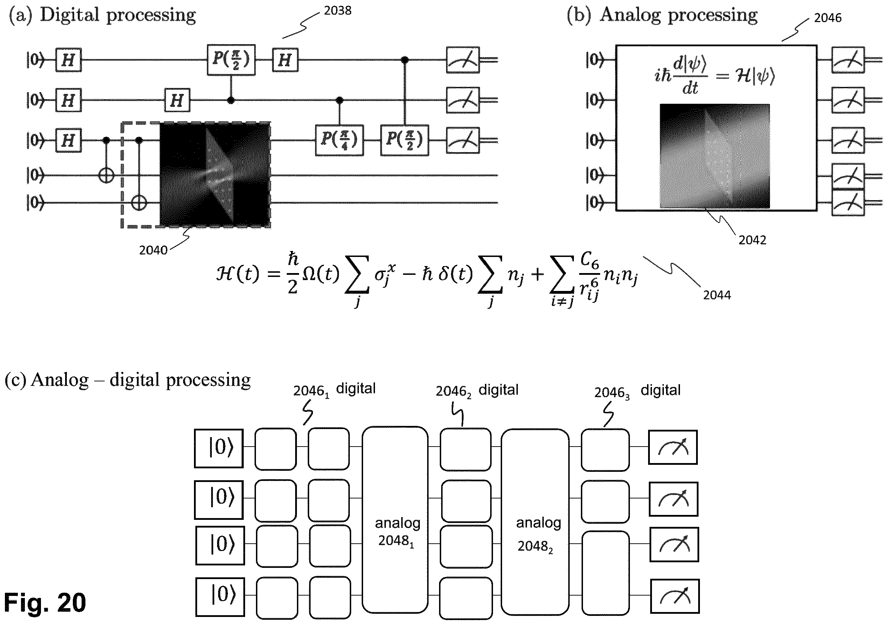

**Fig. 20** illustrates circuit diagrams for execution on a neutral-atom-based quantum computer. On this type of hardware, unitary operators, e.g. those used to encode the quantum feature map and derivatives thereof, can be decomposed in two different kinds of operations: digital or analog. Both of these operations are transformations in the quantum Hilbert space over atomic states.

Schematic (a) of **Fig. 20** depicts a digital quantum circuit **2038**, wherein local laser pulses may be used to individually address neutral atoms to effectuate transitions between atomic states which effectively implement sets of standardized or 'digital' rotations on computational states. These digital quantum gates may include any single-qubit rotations, and a controlled-Pauli-Z operation with arbitrary number of control qubits. Additionally, such digital gate operations may also include 2-qubit operations.

Schematic (b) of **Fig. 20** depicts a circuit of an analog mode **2046** of operation, wherein a global laser light pulse may be applied to groups of, or all, atoms at the same time, with certain properties like detuning, Rabi frequencies and Rydberg interactions to cause multi-qubit entanglement thereby effectively driving the evolution of a Hamiltonian **2044** of the atomic array in an analog way. The combined quantum wavefunction evolves according to Schrödinger's equation, and particular, unitary operators $\hat{\mathcal{U}} = \mathrm{e}^{-\mathrm{i}\,\hat{\mathcal{H}}\,t}$, where $\hat{\mathcal{H}}$ denotes the Hamiltonian and $t$ the time, can be designed by pulse-shaping the parameterized coefficients of the Hamiltonian in time. This way, a parametric analog unitary block can be applied, which entangles the atoms and can act as a variational ansatz, or a feature map, or other entanglement operation.

The digital and analog modes can be combined or alternated, to yield a combination of the effects of each. Schematic (c) of **Fig. 20** depicts an example of a digital-analog quantum circuit, including blocks **2046₁₋₃** of digital qubit operations (single or multi-qubit) and analog blocks **2048₁₋₃**. It can been proven that any computation can be decomposed into a finite set of digital gates, including always at least one multi-qubit digital gate (universality of digital gate sets). This includes being able to simulate general analog Hamiltonian evolutions, by using Trotterization or other simulation methods. However, the cost of Trotterization is expensive, and decomposing multi-qubit Hamiltonian evolution into digital gates is costly in terms of number of operations needed.

Digital-analog circuits define circuits which are decomposed into both explicitly-digital and explicitly-analog operations. While under the hood, both are implemented as evolutions over controlled system Hamiltonians, the digital ones form a small set of pre-compiled operations, typically but not exclusively on single-qubits, while analog ones are used to evolve the system over its natural Hamiltonian, for example in order to achieve complex entangling dynamics. It can be shown that complex multi-qubit analog operations can be reproduced/simulated only with a relatively large number of digital gates, thus posing an advantage for devices that achieve good control of both digital and analog operations, such as neutral atom quantum computer. Entanglement can spread more quickly in terms of wall-clock runtime of a single analog block compared to a sequence of digital gates, especially when considering also the finite connectivity of purely digital devices. Further, digital-analog quantum circuits for a neutral quantum processor that are based on Rydberg type of Hamiltonians can be differentiated analytically so that they can be used in variational and/or quantum machine learning schemes as described in this application.

In order to transform the internal states of these modes, a classical control stack is used to send information to optical components and lasers. The controller may formulate the programmable unitary transformations in a parametrised way. At the end of the unitary transformations, the states of one or more atoms may be read out by applying measurement laser pulses, and then observing the brightness using a camera to spot which atomic qubit is turned 'on' or 'off', 1 or 0. This bit information across the array is then processed further according to the embodiments.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

**Claims**

1. Method for training and sampling a quantum model comprising:

   training a quantum model, preferably a generative quantum model, as a quantum sampler configured to produce samples which are associated with a predetermined target probability distribution and which are exponentially hard to compute classically, the training including classically computing probability amplitudes associated with an execution of a first parameterized quantum circuit that defines a sequence of gate operations for a quantum register and optimizing one or more parameters of the first parameterized quantum circuit based on the classically computed probability amplitudes; and

executing a sampling process using the hardware quantum register, the sampling process including determining an optimized quantum circuit based on the one or more optimized parameters and the first parameterized quantum circuit or a second parameterized quantum circuit, which is related to the first parameterized quantum circuit, and executing the optimized quantum circuit on the hardware quantum register and generating a sample by measuring the output of the hardware quantum register.

2. Method according to claim 1 wherein, the first parameterized quantum circuit and/or the second parameterized circuit is selected from a class of quantum circuits wherein: multiplicative $\epsilon$ estimation of the probability amplitudes based on a quantum circuit of the class of quantum circuits is classically hard; additive $\epsilon$ estimation of the probability amplitudes based on a quantum circuit of the class of quantum circuits is classically easy; and, the probability distributions generated by a quantum circuit of the class of quantum circuits are not poly-sparse.

3. Method according to claims 1 or 2 wherein the training further includes computing marginal probabilities and/or operator expectation values and/or expectation values of observables on the basis of the classically computed probability amplitudes.

4. Method according to any of claims 1-3 wherein the optimizing further includes:

estimating a model probability density function and/or derivative of the model probability density function with respect to the variational parameters based on the classically computed probability amplitudes; and, updating the one or more parameters by comparing the model distribution with the target distribution based on a loss function or a derivative of the loss function with respect to the variational parameters.

5. Method according to any of claims 1-4 wherein the first parameterized quantum circuit comprises a first variational quantum circuit and the second quantum circuit comprises a second variational quantum circuit, the second variational quantum circuit being the inverse of the first variational quantum circuit.

6. Method according to any of claims 1-5 where executing the optimized quantum circuit includes:

translating quantum operations of the optimized quantum circuit into a sequence of control signals; and, controlling the qubits of the hardware quantum register based on the control signals.

7. Method according to any of claims 1-6 wherein the classical training of the quantum model is based on a differentiable quantum generative model (DQGM) scheme, a quantum circuit born machines (QCBM) scheme or quantum generative adversarial network (QGAN) scheme.

8. Method according to any of claims 1-7,

wherein the first quantum circuit and/or second quantum circuit is an instantaneous quantum-polynomial, IQP, circuit including a layer of commuting gate operations between two layers of Hadamard operations; and/or, wherein the first quantum circuit and/or second quantum circuit is an extended IQP circuit including a central layer of Hadamard operations between a first layer and a second layer of Hadamard operations, a first layer of commuting gate operations between the first Hadamard layer and the central Hadamard layer and a second layer of commuting gate operations between the central Hadamard layer and the second Hadamard layer, preferably the first and/or second commuting gate operations including a bi-partite entangling layer.

9. Method according to any of claims 1-8 wherein the first and/or second quantum circuit includes a bi-partite entangling layer, preferably the entangling layer being implemented as a series of multi-qudit digital operations, preferably qubit operations, and/or analog multi-qudit Hamiltonian evolutions.

10. Method according to any of claims 1-9 wherein the classical training of the quantum model is based on a quantum generative adversarial network, QGAN, including a quantum generator for generating samples and discriminator for discriminating samples from the generator and the target distribution.

11. Method according to claims 1-10 wherein the first and/or second parameterized quantum circuit include a quantum feature map and a variational ansatz.

12. A method according to claim to claims 1-11 wherein optimizing one or more parameters of the first parameterized quantum circuit includes: minimizing the loss function based on the classically computed probability amplitudes by variationally tuning variational parameters of the first parameterized quantum circuit and repeating execution of quantum gate operations of the variational tuned first parameterized quantum circuit and measuring the output of the quantum register until a stopping criteria is met.

13. A system for training and sampling a quantum model using a hybrid data processing system comprising a classical computer and a quantum computer comprising a hardware quantum register, wherein the system is configured to perform the steps of:

training a quantum model, preferably a generative quantum model, as a quantum sampler configured to produce samples which are associated with a predetermined target probability distribution and which are exponentially hard to compute classically, the training including classically computing probability amplitudes associated with an execution of a first parameterized quantum circuit that defines a sequence of gate operations for a quantum register and optimizing one or more parameters of the first parameterized quantum circuit based on the classically computed probability amplitudes;
executing a sampling process using the hardware quantum register, the sampling process including determining an optimized quantum circuit based on the one or more optimized parameters and the first parameterized quantum circuit or a second parameterized quantum circuit, which is related to the first parameterized quantum circuit, and executing the optimized quantum circuit on the hardware quantum register and generating a sample by measuring the output of the hardware quantum register.

14. A system for training and sampling a quantum model using a hybrid data processing system comprising a classical computer and a quantum computer comprising a hardware quantum register, wherein the system is configured to perform any of the steps according to claims 1-12.

15. A computer program or suite of computer programs comprising at least one software code portion or a computer program product storing at least one software code portion, the software code portion, when run on a hybrid data processing system comprising a classical computer and a quantum computer comprising a hardware quantum register, being configured for executing the method steps according any of claims 1-12.

Fig. 1

Dataset D = [1.4, 2.9, -3.7, ...]

$M(\theta)$

$M(\theta_{opt})$

Fig. 2

Quantum computer

quantum register

206

control and interface

208

Classical computer

Sampling module

218

Training module

216

Quantum Circuit

214

202

204

210

212

200

EP 4 339 847 A1

304

training module

input description of target probability distribution $p_{target}(x)$ and/or samples from target distribution

302

classical density estimation for samples available from target distribution

305

306

quantum hardware
run training circuit(s) with variational parameters $\theta$ and measure output samples

Update $\theta$

Classical computer

compute $p_{model}(x)$ from measured output samples
compute $L = Dist(p_{model}(x), p_{target}(x))$

308

No

is stopping criterion satisfied?

determine new variational parameters $\theta$ using e.g. gradient descent or a gradient-free method

Yes

send $\theta_{opt}$ to the sampling stage

in case of a gradient descent method, run training quantum circuit with shifted variational parameters $\theta$

312

310

314

sampling module

quantum circuit with $\theta_{opt}$

execute the sampling circuit and generate output samples X by measurements

output samples

318

316

apply $\theta_{opt}$ to a sampling quantum circuit

315

Fig. 3

**404 training module**

**classical computer**

input

402 — description of target probability density $p_{target}(x)$ or samples from target distribution

405 — classical density estimation samples available from target distribution

406 — simulate a training quantum circuit with variational parameters $\theta$ on a classical computer and estimate $p_{model}(x)$

408 — compute $L = Dist(p_{model}(x), p_{target}(x))$

stopping criteria satisfied? — No

412 — update $\theta$ for the quantum circuit in the classical simulation

410 — determine new variational parameters $\theta$ using e.g. gradient descent or a gradient-free method

Yes

414 — send $\theta_{opt}$ to the sampling stage

416 — apply $\theta_{opt}$ to a sampling quantum circuit and execute quantum circuit

**sampling module**

418 — quantum circuit with parameters $\theta_{opt}$ — run quantum circuit on quantum hardware and generate output samples $x$ by measurements

420 — output samples

**Fig. 4**

QCBM training

$|\emptyset\rangle$

502

$U(\theta)$

504

measure/compute
$L$ and/or $dL/d\theta$

506

update $\theta$

determine
new $\theta$

508

**Fig. 5A**

DQGM training

$|\emptyset\rangle$

602

$U_\phi(x)$

604

$U(\theta)$

605

measure/compute
$L$ and/or $dL/d\theta$

606

update $\theta$

determine
new $\theta$

608

**Fig. 6A**

EP 4 339 847 A1

QCBM sampling

$|\emptyset\rangle$

$U(\theta_{opt})$

510

measure in
computational
basis

512

**Fig. 5B**

DQGM sampling

$|\emptyset\rangle$

$U^\dagger(\theta_{opt})$

610

$U_{T\phi}$

612

measure in the
computational
basis

614

**Fig. 6B**

generator G

$|0\rangle$ → $U_G(\theta_G)$ and computational basis measurement

702

$x \sim p_{model}$

discriminator D

706

$|0\rangle$ → $U_\phi(x)$ $U_D(\theta_D)$

708

$\langle Z_1 \rangle$

710

real data

704

$x \sim p_{target}$

$D(x) = \langle 0|U_\phi^\dagger(x)U_D^\dagger(\theta_D)Z_1 U_D(\theta_D)U_\phi(x)|0\rangle = \langle Z_1 \rangle$

712

$$L(\theta_G, \theta_D) = E_{x \sim p_{target}} \log(D(x)) + E_{x \sim p_{model}} \log(1 - D(x)) = \sum_x p_{target}(x) \log(D(x)) + \sum_x p_{model}(x) \log(1 - D(x))$$

**Fig. 7**

Fig. 8A

Fig. 8B

Fig. 8C

Fig. 8D

EP 4 339 847 A1

902

$U_\phi(x)$

| H | $R_z(\phi_1(x))$ |
| H | $R_z(\phi_2(x))$ |
| H | $R_z(\phi_3(x))$ |
| H | $R_z(\phi_4(x))$ |

904

$U(\overline{\theta})$

$R_z(\theta_1)$ $R_z(\theta_2)$ $R_z(\theta_3)$ $R_z(\theta_4)$

$R_{zz}(\overline{\theta})$ gates with bi-partite connectivity

H H H H

$R_z(\theta_5)$ $R_z(\theta_6)$ $R_z(\theta_7)$ $R_z(\theta_8)$

$R_{zz}(\overline{\theta})$ gates with bi-partite connectivity

H H H H

$910_1$  $908_1$  $906_1$  $910_2$  $908_2$  $906_2$

**Fig. 9**

Input description of target probability distribution $p_{target}(x)$ and possibly $dp_{target}(x)/dx$ and higher order derivative

1002

Classically simulate quantum circuit with parameters $\theta$ and estimate $p_{model}(x)$ up to an additive polynomial error $\epsilon$

1004

Calculate $dp_{model}(x)/dx$ using classical simulation of quantum circuit using parameter shift rule up to an additive polynomial error $\epsilon$

1006

Compute loss function $L(p_{target}(x), p_{model}(x), \frac{dp_{target}}{dx}, \frac{dp_{model}}{dx}..)$

1008

Is stopping criteria satisfied?

1010

Update $\theta$

if stopping criteria not satisfied update $\theta$, e.g. classically estimate $dL/d\theta$ using a parameter shift rule up to an additive polynomial error $\epsilon$.

1012

Send optimized $\theta$ values to the sampling stage

1014

**Fig. 10**

EP 4 339 847 A1

| $x$ 1102 | → | feature map $U_\phi(x)$ 1104 | → | variational quantum circuit $U_\theta$ 1106 | → | measure in the computational basis to obtain bitstrings 1108 | → | classical post-processing to estimate probability $p_\theta(x)$ 1110 |

**Fig. 11A**

| $x$ 1202 | → | feature map $U_\phi(x)$ 1204 | → | variational quantum circuit $U_\theta$ 1206 | → | estimate $p_\theta(x)$ using classical algorithms 1212 |

**Fig. 11B**

Start with a family known to admit additive polynomial estimation of probability
1202

Check time complexity and compare with other hard families like IQP
1204

Measure sparsity of distribution to verify quantum advantage of sampling
1206

Number of qubits<20?

No → Cross entropy difference using sampling
1208

Yes → Anti-concentration and t-sparseness of probability distributions
1210

**Fig. 12**

Fig. 13B

Fig. 13A

Fig. 13D

Fig. 13C

**Fig. 14A**

**Fig. 14B**

Fig. 15

**Fig. 16A**

$f(\frac{1}{\epsilon})$

$1/\epsilon$

10 qubits

**Fig. 16B**

$f(\frac{1}{\epsilon})$

$1/\epsilon$

12 qubits

**Fig. 16C**

$f(\frac{1}{\epsilon})$

$1/\epsilon$

14 qubits

**Fig. 16D**

$f(\frac{1}{\epsilon})$

$1/\epsilon$

16 qubits

Fig. 17A

Fig. 17B

Fig. 18

EP 4 339 847 A1

Fig. 19A

Fig. 19C

Fig. 19B

Fig. 20

(a) Digital processing

(b) Analog processing

$$\mathcal{H}(t) = \frac{\hbar}{2}\Omega(t)\sum_j \sigma_j^x - \hbar\,\delta(t)\sum_j n_j + \sum_{i\neq j}\frac{C_6}{r_{ij}^6}n_i n_j$$

(c) Analog – digital processing

Europäisches
Patentamt

European
Patent Office

Office européen
des brevets

# EUROPEAN SEARCH REPORT

**Application Number**

EP 22 19 6222

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MARCELLO BENEDETTI ET AL: "Parameterized quantum circuits as machine learning models", QUANTUM SCIENCE AND TECHNOLOGY, vol. 4, no. 4, 18 June 2019 (2019-06-18), page 043001, XP055732007, DOI: 10.1088/2058-9565/ab4eb5 * Sections I, II, III, IV; figures 1,2; table 1 * | 1-15 | INV. G06N10/20 G06N10/60 |
| A | SERGEY BRAVYI ET AL: "Classical algorithms for Forrelation", ARXIV.ORG, CORNELL UNIVERSITY LIBRARY, 201 OLIN LIBRARY CORNELL UNIVERSITY ITHACA, NY 14853, 31 October 2021 (2021-10-31), XP091065764, * pages 1, 5, 14, 28 (especially the first paragraph of Section 6) * | 1-15 | |
| A | OLEKSANDR KYRIIENKO ET AL: "Protocols for Trainable and Differentiable Quantum Generative Modelling", ARXIV.ORG, CORNELL UNIVERSITY LIBRARY, 201 OLIN LIBRARY CORNELL UNIVERSITY ITHACA, NY 14853, 16 February 2022 (2022-02-16), XP091161345, * figure 1 * | 1-15 | **TECHNICAL FIELDS SEARCHED (IPC)**<br><br>G06N |

The present search report has been drawn up for all claims

| Place of search | Date of completion of the search | Examiner |
|---|---|---|
| The Hague | 20 February 2023 | Szymanski, Francois |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JIN-GUO LIU et al.** Differentiable learning of quantum circuit Born machines. *Phys. Rev. A,* 2018, vol. 98, 062324
- **KYRIIENKO et al.** Protocols for Trainable and Differentiable Quantum Generative Modelling. *arXiv:2202.08253,* 2022
- **S. BRAVYI et al.** Classical algorithms for Forrelation. *arXiv:2102.06963v2,* 2021
- Quantum supremacy using a programmable superconducting processor. *Nature,* 2019, vol. 574, 505-510
- **H. PASHAYAN et al.** *Quantum 4, 10.22331/q-2020-01-13-223,* 2020